# EUROPÄISCHE PATENTSCHRIFT

(11) **EP 1 414 615 B1**
(45) Veröffentlichungstag und Bekanntmachung des Hinweises auf die Patenterteilung: **06.07.2005**
(21) Anmeldenummer: 02794584.9
(22) Anmeldetag: 09.08.2002
(51) Int. Cl.: B23Q 1/00, B23Q 1/70, B23Q 11/12, B23Q 5/00, B23P 11/00, B23P 15/00

(54) **ANTRIEBSGEHÄUSE FÜR WERKZEUGMASCHINENANTRIEBE**
HOUSING FOR MACHINE TOOL DRIVES
CARTER D'ENTRAINEMENT DESTINE A DES ENTRAINEMENTS DE MACHINES-OUTILS

(30) Priorität: 09.08.2001 DE 10140253
(43) Veröffentlichungstag der Anmeldung: 06.05.2004
(73) Patentinhaber: Index-Werke GmbH & Co. KG Hahn & Tessky, 73730 Esslingen (DE)
(72) Erfinder: TRAUTMANN, Günther, Heinrich, 73230 Kirchheim (DE)
(74) Vertreter: HOEGER, STELLRECHT & PARTNER Patentanwälte
(86) Internationale Anmeldenummer: PCT/EP2002/008902
(87) Internationale Veröffentlichungsnummer: WO 2003/013781

(56) Entgegenhaltungen:
- DE-A- 19 958 146
- DE-C- 10 001 523
- US-A- 4 422 498
- US-A- 4 630 498
- US-A- 5 160 824
- US-A- 5 657 679
- US-A- 5 730 817
- US-A- 5 836 215

## Beschreibung

Die Erfindung betrifft ein Antriebsgehäuse für Werkzeugmaschinenantriebe.

Antriebsgehäuse für Werkzeugmaschinenantriebe werden üblicherweise als Gußteile hergestellt.

Bei derartigen, aus Guß hergestellten Antriebsgehäusen besteht meist das Problem, daß das Vorsehen von komplexen Ausnehmungen zum Einsetzen des Werkzeugmaschinenantriebs oder zum Einsetzen von Maschinenelementen oder zum Durchführen von Kühlmedium problematisch ist.

Soll das Antriebsgehäuse als Gußteil einfach gefertigt werden können, sind komplexe Ausnehmungen nicht realisierbar. Sind komplexe Ausnehmungen zwingend erforderlich, so ist das Ausführen des Gußteils äußerst aufwendig und dabei die Gußtechnik auch äußerst kostenintensiv. Selbst bei komplexester Gußtechnik lassen sich bestimmte Arten von Ausnehmungen nicht mehr sinnvoll realisieren.

Aus der DE-A-199 58 146 ist ein Gehäuse bekannt, das eine Vielzahl von in einer Stapelrichtung gestapelten, aus Flachmaterial ausgeschnittenen und sich in Stapelebenen quer zur Stapelrichtung erstreckenden Segmenten umfaßte von denen jedes zusammenhängende Materialstegsysteme aufweist, die derart verlaufen, daß in Stapelrichtung aufeinanderfolgende Segmente mit ihren Materialstegsystemen unter Bildung von Überlappungsflächen aneinander anliegen und im Bereich ihrer Überlappungsflächen flächig und stoffschlüssig miteinander verbunden sind. Diese Aufgabe wird durch ein Gehäuse gemäß Anspruch 1 gelöst.

Der Erfindung liegt die Aufgabe zugrunde, ein Antriebsgehäuse für Werkzeugmaschinenantriebe zu schaffen, welche die Möglichkeit eröffnet, mit einfacher Herstellungstechnik hinsichtlich der vorzusehenden Ausnehmungen keinerlei Beschränkungen zu unterliegen.

Der Vorteil dieser Lösung ist darin zu sehen, daß die Ausbildung des Antriebsgehäuses aus einem Stapel von Segmenten erlaubt, die Materialstegsysteme in nahezu beliebiger Form auszuschneiden und dadurch die Möglichkeit zu haben, Ausnehmungen beliebiger Komplexität durch geeignete Ausbildung der Materialstegsysteme im Antriebsgehäuse zu realisieren.

Dabei ist die Herstellungstechnik für das Antriebsgehäuse unabhängig von der Komplexität der Materialstegsysteme und somit der dadurch bedingten Ausnehmungen im Antriebsgehäuse. Die einzige Randbedingung besteht darin, daß die Materialstegsysteme Überlappungsflächen miteinander aufweisen müssen, im Bereich von welchen eine flächige stoffschlüssige Verbindung zwischen den einzelnen Segmenten realisierbar ist.

Eine flächige stoffschlüssige Verbindung ist auf mehrere Arten, beispielsweise durch Kleben realisierbar.

Eine besonders vorteilhafte Lösung sieht jedoch vor, daß die flächige stoffschlüssige Verbindung durch eine Lotschicht erfolgt.

Eine derartige Lotschicht hat den Vorteil, daß sich die einzelnen Segmente als Stapel zu einer Vorform des Antriebsgehäuse stapeln lassen, wobei zwischen den Segmenten Kapillarspalte bestehen, in welche sich dann bei Erhitzen die Lotschicht aufgrund der Kapillarwirkung hineinzieht. Bei geeigneter Versorgung mit Lotmaterial läßt sich dabei im Bereich der Überlappungsflächen vorzugsweise eine vollflächige stoffschlüssige Verbindung im Bereich der Überlappungsfläche zwischen den Segmenten schaffen.

Um die Segmente in möglichst einfacher Art und Weise herstellen zu können, sieht eine besonders günstige Lösung vor, daß zumindest bei einem Teil der Segmente die Materialstegsysteme die Segmente über ihre gesamte Dicke durchsetzende Ausschnitte aufweisen. Das heißt, daß die Ausschnitte stets die gesamte Materialdicke der Materialstegsysteme durchsetzen, so daß die Segmente beliebig einfach durch einen Schneidvorgang, vorzugsweise Laserschneiden herstellbar sind.

Die Ausschnitte können dabei beliebige Form aufweisen.

Um jedoch eine geeignete Stabilität zu erreichen, ist es besonders günstig, wenn die Materialstegsysteme die Ausschnitte zumindest teilweise umschließen.

Hinsichtlich der Art der Ausschnitte und der damit erhältlichen Lösungen sind die unterschiedlichsten Arten denkbar. So sieht die erfindungsgemäße Lösung vor, daß Aufnahmeausschnitte in den Segmenten vorgesehen sind, die eine sich in der Stapelrichtung innerhalb des Antriebsgehäuses über die Segmente hinweg erstreckende Ausnehmung zur Aufnahme eines Werkzeugmaschinenelements bilden.

Ein derartiges Werkzeugmaschinenelement kann dabei der eingangs genannte Werkzeugmaschinenantrieb oder jegliche Art von in einer Werkzeugmaschine verwendbares Teil, wie beispielsweise auch eine Zuleitung oder Versorgungsleitung für den Werkzeugmaschinenantrieb sein.

Eine andere Art eines Werkzeugmaschinenelements können Teile eines Antriebsstrangs oder Teile eines Verschiebeantriebs, wie beispielsweise eines Schlittenantriebs der Werkzeugmaschine sein.

Besonders vorteilhaft ist es dabei, wenn sich die durch die Aufnahmeausschnitte gebildete Ausnehmung durch das gesamte Antriebsgehäuse erstreckt, da in diesem Fall die Montage der Maschinenelemente später einfach realisierbar ist.

Da durch die Maschinenelemente häufig Wärme erzeugt wird, die vorteilhafterweise abgeführt werden sollte, ist erfindungsgemäß vorgesehen, daß ein Teil der Segmente die Aufnahmeausschnitte umgebende Wandstege aufweist, welche mit in Stapelrichtung vorausgehenden und nachfolgenden Materialstegen stoffschlüssig verbundene Überlappungsbereiche aufweisen und eine die Ausnehmung umschließende Wand mit im Bereich der Wandstege verbesserter Wärmeleitung bilden.

Der Vorteil dieser Lösung ist darin zu sehen, daß sich durch die Wandstege, die möglichst schmal ausgeführt werden, Bereiche verbesserter Wärmeleitung ausbilden lassen, die die Abfuhr von Wärme aus der Ausnehmung erleichtern.

Vorzugsweise sind dabei die Wandstege so ausgebildet, daß sie eine die Ausnehmung von einem Kühlmedium trennende Wand bilden, so daß das Kühlmedium direkt die Wandstege kontaktieren und die Wärme aus den Wandstegen abführen kann.

Vorzugsweise sind dabei die Wandstege so ausgebildet, daß sie in den Stapelebenen eine Breite aufweisen, längs derselben die um weniger als einen Faktor zwei variiert, um eine möglichst gleichmäßige Wärmeleitung durch die Wandstege realisieren zu können.

Um eine möglichst günstige Kühlung realisieren zu können, ist vorzugsweise vorgesehen, daß die Wandstege sich zumindest über einen Teilumfang des Aufnahmeausschnittes erstrecken und somit möglichst eine umfänglich des Aufnahmeausschnitts erfolgende Wärmeableitung erlauben.

Eine besonders günstige Ausbildung der Wandstege sieht vor, daß diese eine dem Aufnahmeausschnitt abgewandte Außenkontur aufweisen, deren Verlauf dem einer dem Aufnahmeausschnitt zugewandten Innenkontur der Wandstege im wesentlichen folgt, das heißt, daß die Breite der Wandstege in den Stapelebenen zwischen der Innen- und Außenkontur näherungsweise konstant ist.

Um dem Antriebsgehäuse die notwendige Stabilität zu verleihen, ist vorzugsweise vorgesehen, daß in Stapelrichtung beiderseits eines Segments mit einem Wandsteg Segmente mit Tragstegen folgen, die in den Stapelebenen breiter als die Wandstege ausgebildet sind. Diese Lösung bietet den Vorteil, einerseits eine günstige Wärmeleitung von der Ausnehmung weg zu schaffen, andererseits aber die notwendige Stabilität aufrecht zu erhalten, insbesondere dann, wenn sich in der Ausnehmung abstützende Maschinenelemente vorgesehen sind.

Dabei können mehrere Segmente mit einem Wandsteg unmittelbar aufeinanderfolgen, die dann aber vorteilhafterweise zwischen Segmenten mit Tragstegen eingeschlossen sind, die im wesentlichen die Versteifung des Antriebsgehäuses übernehmen.

Da bei der erfindungsgemäßen Lösung die Dicke der Segmente grundsätzlich frei wählbar ist, sieht ein konstruktiv besonders günstig aufgebautes Ausführungsbeispiel eines Antriebsgehäuses vor, daß ein Segment mit einem Wandsteg zwischen zwei Segmenten mit einem Tragsteg liegt, so daß die aus Stabilitätsgründen zu vertretende Breite eines Wandstegs zwischen zwei Tragstegen möglichst durch ein einziges Segment realisiert werden kann.

Bei Strukturen, die eine begrenzte Stabilität aufweisen müssen, kann jedoch die Ausdehnung der Wandstege in Stapelrichtung noch größer sein, so daß dann aus Gründen der Herstellbarkeit der Segmente auch mehrere, einen Wandsteg aufweisende Segmente unmittelbar aufeinanderfolgen, wobei die Wandstege alle vorzugsweise miteinander Überlappungsflächen aufweisen.

Um für den Werkzeugmaschinenantrieb keine separate Stabilisierung vorsehen zu müssen, ist vorzugsweise vorgesehen, daß die Summe der in den Überlappungsflächen miteinander verbundenen Materialstegsysteme ein räumlich zusammenhängendes, selbsttragendes Tragwerk für den Werkzeugmaschinenantrieb bilden, so daß der Werkzeugmaschinenantrieb selbst stabil in dem Antriebsgehäuse gelagert werden kann.

In diesem Zusammenhang bietet die erfindungsgemäße Lösung ebenfalls besondere Vorteile hinsichtlich der Übernahme der von dem Werkzeugmaschinenantrieb auf das Antriebsgehäuse wirkenden Kräfte, da die Materialstegsysteme an jedem Ort des Antriebsgehäuses diesen Kräften angepaßt werden können. So können beispielsweise stabilere Materialstegsysteme in den Bereichen angeordnet werden, in denen große Kräfte vom Werkzeugmaschinenantrieb wirken, während andererseits in den Bereichen, in denen nahezu keine oder geringe Kräfte vom Werkzeugmaschinenantrieb auf das Antriebsgehäuse wirken, Materialstegsysteme Verwendung finden können, die eine möglichst geringe Masse aufweisen, so daß zusätzlich noch zur Optimierung der Krafteinleitung bei dem erfindungsgemäßen Antriebsgehäuse eine Optimierung der erforderlichen und somit gegebenenfalls zu beschleunigenden Massen möglich ist.

Vorzugsweise bilden die Materialstegsysteme dabei ein eine Art räumliches Flächentragwerksystem, bei welchem sowohl in Stapelrichtung als auch quer zur Stapelrichtung Zwischenräume zwischen den einzelnen Tragwerkselementen realisierbar sind.

Vorzugsweise ist dabei das Antriebsgehäuse so ausgebildet, daß das Tragwerk Materialstege aufweist, die gegenüber anderen Materialstegen in den Stapelebenen verbreitert ausgeführt und in Hauptlastrichtungen verlaufend angeordnet sind.

Eine vorteilhafte Ausführung sieht dabei vor, daß die das Tragwerk bildenden Materialstege als Materialstegringe ausgebildet sind.

Darüber hinaus ist eine stabile und möglichst einfache Lagerung des Werkzeugmaschinenantriebs in der entsprechenden Aufnahme zu erreichen. Hierzu ist vorzugsweise vorgesehen, daß der Aufnahmeausschnitt mindestens eines der Segmente einen Lagersitz für ein Lager des Werkzeugmaschinenantriebs bildet. Das heißt, daß durch den Aufnahmeausschnitt von mindestens einem der Segmente oder von mehreren Segmenten unmittelbar ein Lagersitz für das Lager eines Werkzeugmaschinenantriebs gebildet werden kann, so daß unmittelbar durch die Herstellung der Ausschnitte bereits der Lagersitz herstellbar ist und somit zumindest Grobbearbeitungsvorgänge, die bei Gußteilen üblich sind, entfallen können.

Um auch im Bereich des Lagersitzes eine gute Kühlung zu ermöglichen, sieht ein vorteilhaftes Ausführungsbeispiel vor, daß der Lagersitz durch die Aufnahmeausschnitte mehrerer Segmente gebildet ist und zumindest ein Teil dieser Segmente Wandstege bildet, die einen möglichst guten Wärmefluß zulassen. Mit derartigen, bereits beschriebenen Wandstegen läßt sich somit auch im Bereich des Lagersitzes optimal die entstehende Wärme abführen, wobei diese Wandstege vorzugsweise in gleicher Weise ausgebildet und auch zwischen Tragstegen angeordnet sind, um wiederum im Bereich des Lagersitzes die erforderliche Stabilität zu schaffen.

Um ferner auch das Antriebsgehäuse in geeigneter Weise montieren zu können, sieht eine vorteilhafte Lösung vor, daß mindestens eines der Segmente mit seiner Außenkontur eine Tragfläche für das Antriebsgehäuse bildet.

Damit läßt sich mit der erfindungsgemäßen Lösung auch in vorteilhafter Weise die Art der Lagerung des Antriebsgehäuses mit in die Ausbildung der Segmente miteinbeziehen, so daß auch bereits die Lagerfläche durch das Ausschneiden der Segmente zumindest vorbearbeitet werden kann und somit aufwendige Bearbeitungsgänge entfallen können.

Darüber hinaus sieht eine vorteilhafte Ausbildung eines erfindungsgemäßen Antriebsgehäuses vor, daß mindestens eines der Segmente ein positionsfestlegendes Element des Antriebsgehäuses bildet.

Derartige positionsfestlegende Elemente können beispielsweise jede Art von Verankerungsflanschen sein. Ein derartiges positionsfestiegendes Element ist aber auch beispielsweise ein Zahnkranz, welcher es erlaubt, beliebige Drehpositionen des Antriebsgehäuses einzustellen und festzulegen.

Der Vorteil dieser Lösung ist ebenfalls darin zu sehen, daß sich in einfacher Weise derartige positionsfestiegende Elemente als integraler Bestandteil des Antriebsgehäuses vorsehen lassen, ohne daß hierzu spezielle Maßnahmen erforderlich sind.

Beispielsweise wäre es bei Ausführung des Antriebsgehäuses in Gußtechnik aufwendig, Halteflansche anzuformen. Es ist jedoch bei der Ausführung des Antriebsgehäuses in Gußtechnik nahezu unmöglich, beispielsweise einen Zahnkranz anzuformen, da sich bei Gußtechnik die erforderlichen Festigkeiten nicht realisieren lassen.

Im Gegensatz zur Gußtechnik bietet jedoch die erfindungsgemäße Lösung generell den großen Vorteil, daß sich auch die Materialfestigkeiten der einzelnen Segmente des Antriebsgehäuses jeweils an die jeweiligen Lastanforderungen anpassen lassen. Beispielsweise kann im Bereich eines positionfestlegenden Elements oder im Bereich eines Lagersitzes oder im Bereich von Tragflächen ein Material mit höherer Festigkeit für die Herstellung der Segmente verwendet werden, als in den Bereichen des Antriebsgehäuses, in denen die Flächenbelastungen, insbesondere die Oberflächenbelastungen, geringer sind.

Darüber hinaus wurden im Zusammenhang mit der Darlegung der einzelnen Ausführungsbeispiele der erfindungsgemäßen Lösung keine näheren Angaben über die Kühlung gemacht.

So sieht ein besonders vorteilhaftes Ausführungsbeispiel eines Antriebsgehäuses vor, daß zumindest ein Teil der Segmente Kühlkanalausschnitte aufweist, die zumindest einen Kühlkanalabschnitt eines durch das Antriebsgehäuse verlaufenden Kühlkanalsystems bilden.

Besonders vorteilhaft ist es dabei, wenn die Kühlkanalausschnitte von in Stapelrichtung aufeinanderfolgenden Segmenten Kühlkanalabschnitte bilden, die mit Umlenkungen durch das Antriebsgehäuse verlaufen. Derartige Umlenkungen verbessern dabei den Wärmekontakt zwischen dem durch diese Kühlkanalabschnitte geführten Kühlmedium.

Dies ist ein erheblicher Vorteil der erfindungsgemäßen Lösung, da sich beispielsweise in Gußtechnik Umbiegungen von Kühlkanalabschnitten entweder nicht und/oder nur äußerst aufwendig realisieren lassen.

Noch vorteilhafter ist es dabei, wenn die Kühlkanalabschnitte mit mehrfachen Umlenkungen durch das Antriebsgehäuse verlaufen. Eine derartige Realisierung mehrfacher Umlenkungen verbietet sich nahezu in Gußtechnik, läßt jedoch eine Steigerung des Wärmeübergangs auf das Kühlmedium zu.

Eine besonders günstige Realisierungform sieht vor, daß der Kühlkanalabschnitt ungefähr in Richtung quer zur Stapelachse verläuft.

Obwohl die Segmente in Stapelrichtung gestapelt sind und vorzugsweise in der Stapelrichtung die Ausschnitte mit Überlappung vorgesehen sind, läßt sich bei der erfindungsgemäßen Lösung auch ein Verlauf des Kühlkanalabschnitts quer zur Stapelrichtung realisieren.

Bei einem derartigen quer zur Stapelrichtung verlaufenden Kühlkanalabschnitt läßt sich eine besonders günstige Wärmeableitung dann realisieren, wenn der Kühlkanalabschnitt sich in Richtung der Stapelrichtung ausbildende Mäander aufweist und zwischen den Kühlkanalausschnitten mindestens zweier Segmente wechselt.

Eine konstruktiv besonders günstig realisierbare Ausführungsform sieht vor, daß der Kühlkanalabschnitt bereichsweise in einem Segment quer zur Stapelrichtung verläuft und in Stapelrichtung durch die Materialstegsysteme des vorausgehenden und des nächstfolgenden Segments abgeschlossen ist.

Bei einem derartigen Kühlkanalabschnitt läßt sich eine besonders zweckmäßige mäandrierende Form dann konstruktiv einfach ausbilden, wenn der Kühlkanalabschnitt im Verlauf seiner Erstreckung quer zur Stapelachse von einem Segment in das nächstfolgende Segment und dann zurück in das eine Segment wechselt.

Alternativ oder ergänzend zu den bislang beschriebenen Kühlkanalsystemen sieht ein vorteilhaftes Ausführungsbeispiel vor, daß ein Teil der Segmente Kühlkanalausschnitte aufweist, weiche sich zu einem in Stapelrichtung verlaufenden Kühlkanalabschnitt ergänzen.

Besonders günstig ist es dabei, wenn sich die Kühlkanalausschnitte in den Segmenten zu einem in Stapelrichtung verlaufenden, jedoch quer zur Stapelrichtung mindestens einen Mäander aufweisenden Kühlkanalabschnitt ergänzen, so daß auch in diesen Kühlkanalabschnitten ein besonders günstiger Wärmeübergang auf das Kühlmedium realisierbar ist.

Dabei sind bei der erfindungsgemäßen Lösung des Antriebsgehäuses alle Realisierungsformen und Verlaufsformen eines derartigen Kühlkanalabschnitts, insbesondere mit Mäandern, realisierbar.

Eine besonders günstige Form sieht vor, daß der Kühlkanalabschnitt eine in den Stapelebenen gebogene Form aufweist, so daß sich der Kühlkanalabschnitt beispielsweise an einen einen Lagersitz bildenden Ausschnitt anpassen läßt und somit zumindest in einem Teil des Kühlkanalabschnitts ein möglichst gleichmäßiger Wärmeübergang von dem Lagersitz auf das im Kühlkanalabschnitt geführte Kühlmedium erfolgt. Darüber hinaus läßt sich bei einer derartigen Ausbildung des Kühlkanalabschnitts auch in besonders günstiger Weise auf die Stabilität Rücksicht nehmen, da die Wand zwischen dem Kühlkanalabschnitt und dem Lagersitz in einfacher Weise an die Stabilitätserfordemisse angepaßt werden kann.

Eine besonders vorteilhafte Form sieht vor, daß der Kühlkanalabschnitt sich quer zur Stapelrichtung ausbildende Mäander aufweist, wobei dann in diesem Fall vorzugsweise die Mäander in in den Stapelebenen gebogener Form verlaufen.

Im Zusammenhang mit den voranstehenden Ausführungsbeispielen wurde bereits erläutert, daß in den einzelnen Segmenten Materialien mit unterschiedlichen Festigkeiten zur Verfügung gestellt werden können.

Dies wäre beispielsweise dadurch möglich, daß die einzelnen Segmente von vornherein aus Materialien unterschiedlicher Festigkeit, beispielsweise Stahl und gehärteter Stahl oder Leichtmetall oder ähnlichem hergestellt sein können.

Eine derartige Materialauswahl würde das gesamte Materialstegsystem des jeweiligen Segments betreffen.

Um jedoch selektiv die Materialparameter variieren zu können, und insbesondere dann, wenn härteres Material zumindest stellenweise zur Verfügung stehen soll, die Materialeigenschaften in anderen Bereichen der Materialstegsysteme, insbesondere die Bearbeitungsmöglichkeiten, nicht nachteilig zu beeinflussen, ist vorzugsweise vorgesehen, daß bei einem Teil der Segmente die Materialstegsysteme aus einem härtbaren Material hergestellt sind.

Beispielsweise wäre es bei Verwenden eines härtbaren Materials denkbar, die Materialstegsysteme vor dem Zusammenbau des Antriebsgehäuses bereichsweise zu härten und dann das Antriebsgehäuse als Ganzes herzustellen.

Eine andere vorteilhafte Möglichkeit sieht jedoch vor, daß die Materialstegsysteme aus einem nach Herstellung des Antriebsgehäuse härtbaren Material hergestellt sind.

Ein derartiges nach Herstellung des Antriebsgehäuses härtbares Material hat den Vorteil, daß die gehärteten Bereiche nach Herstellung des Antriebsgehäuses als Ganzem hergestellt werden können und damit eine noch selektivere Härtung der gewünschten Bereiche möglich ist.

Besonders vorteilhaft ist diese Lösung auch dadurch, daß damit das stoffschlüssige Verbinden der Segmente miteinander, beispielsweise durch Hartlöten, keine negativen, und insbesondere keine abhängig von den Segmenten unterschiedlichen negativen Einfluß auf die Härte hat, da das Härten aller den gewünschten Bereich tangierenden Materialstegsysteme unterschiedlicher Segmente nach dem stoffschlüssigen Verbinden derselben erfolgt.

Beim Härten des Materials der Materialstegsysteme sind unterschiedlichste Vorgehehensweisen denkbar. Beispielsweise wäre es denkbar, die Materialstegsysteme durch Diffusionshärten oder Laserhärten zu härten.

Eine besonders vorteilhafte Vorgehensweise sieht vor, daß das Material durch Induktionshärten härtbar ist.

Als besonders vorteilhaft hat es sich dabei herausgestellt, wenn lediglich ein bereichsweises Härten des Materials der Materialstegsysteme erfolgt, um eine Bearbeitung in anderen Bereichen der Materialstegsysteme, die nicht gehärtet sein müssen, nicht zu erschweren.

Um ein erfindungsgemäß aus Segmenten hergestelltes Antriebsgehäuse vorzugsweise auch gleichzeitig dazu einsetzen zu können, andere, beispielsweise bewegbare Maschinenelemente zu führen, ist vorzugsweise vorgesehen, daß das Antriebsgehäuse eine durch mindestens ein Segment gebildete Führungsfläche für ein bewegbares Maschinenelement aufweist.

Unter einem derartigen bewegbaren Maschinenelement sind die unterschiedlichsten Teile zu verstehen. Beispielsweise könnte ein derartiges bewegbares Maschinenelement eine rotierende Welle oder ein sich linear bewegender Führungskörper, beispielsweise eines Schlittens für Werkstücke oder Werkzeuge, sein.

Die Führungsfläche kann sich dabei sowohl quer zur Stapelrichtung erstrecken. Es ist aber im Rahmen der erfindungsgemäßen Lösung auch denkbar, daß sich die Führungsfläche in Stapelrichtung über mehrere Segmente erstreckt. In diesem Fall wird die Führungsfläche vorzugsweise durch Nachberarbeiten des Antriebsgehäuses im Bereich dieser Segmente in der erforderlichen Oberflächenqualität hergestellt.

Da Führungsflächen in der Regel begrenzte Flächen des Antriebsgehäuses sind, ist vorzugsweise vorgesehen, daß die Führungsfläche durch eine Oberfläche eines Teilbereichs des Materialstegsystems des jeweiligen Segments gebildet ist.

Die Oberfläche kann dabei im Bereich einer Innenkontur des jeweiligen Segments liegen, es ist aber auch denkbar, daß die Oberfläche im Bereich einer Außenkontur des jeweiligen Segments liegt.

Insbesondere bei sich in Stapelrichtung erstreckenden Führungsflächen sind diese durch die Oberfläche einer Schmalseite oder mehrerer Schmalseiten mehrerer Materialstegsysteme in einem Teilbereich derselben gebildet.

Um eine möglichst hohe Qualität und Widerstandsfähigkeit der Führungsfläche zu erhalten ist vorzugsweise vorgesehen, daß der Teilbereich des Materialstegsystems gehärtet ist, was allerdings voraussetzt, daß das Materialstegsystem in diesem Fall aus einem härtbaren Material hergestellt ist.

In diesem Fall wird dabei die Führungsfläche durch eine gehärtete Fläche gebildet.

Besonders zweckmäßig ist es dabei, wenn die Führungsfläche einen in Stapelrichtung im wesentlichen gleichbleibenden Härteverlauf aufweist.

Die Führungsfläche kann dabei grundsätzlich eine Führungsfläche für jede Art von sich auf dieser abstützenden Maschinenelemente sein. Beispielsweise könnte sich ein derartiges Maschinenelement durch Abrollen auf dieser Führungsfläche abstützen.

Im Rahmen der erfindungsgemäßen Lösung ist es jedoch günstig, wenn die Führungsfläche eine Gleitführungsfläche ist.

Weitere Merkmale und Vorteile der Erfindung sind Gegenstand der nachfolgenden Beschreibung sowie der zeichnerischen Darstellung eines die Erfindung gemäß den vorherigen Ausführungen nicht beschränkenden Ausführungsbeispiels.

In der Zeichnung zeigen:
- Fig. 1: einen Schnitt parallel zu einer Stapelrichtung durch einen Teilbereich einer Werkzeugmaschine, in welchem ein erstes Ausführungsbeispiel eines erfindungsgemäßen Antriebsgehäuses in Form einer Spindeltrommel vorgesehen ist;
- Fig. 2: einen vergrößerten Schnitt durch das in Fig. 1 dargestellte erste Ausführungsbeispiel des Antriebsgehäuses längs den Unien 2-2 in Fig. 3;
- Fig. 3: einen Schnitt längs Linie 3-3 in Fig. 2;
- Fig. 4: einen Schnitt längs Linie 4-4 in Fig. 2;
- Fig. 5: einen Schnitt längs der gekrümmten gestrichelten Linie 5-5 in Fig. 3;
- Fig. 6: einen teilweisen Schnitt längs Linie 6-6 in Fig. 2;
- Fig. 7: einen teilweisen Schnitt längs Linie 7-7 in Fig. 2;
- Fig. 8: einen Schnitt längs der gekrümmten gestrichelten Linie 8-8 in Fig. 7;
- Fig. 9: einen Schnitt parallel zu einer Stapelrichtung durch einen Teilbereich einer Werkzeugmaschine, in welchem ein zweites Ausführungsbeispiel eines erfindungsgemäßen Antriebsgehäuses in Form eines Schlittenantriebsgehäuses vorgesehen ist;
- Fig. 10: eine vergrößerte Darstellung des in Fig. 9 dargestellten zweiten Ausführungsbeispiels des Antriebsgehäuses in derselben Schnittansicht wie Fig. 1 sowie längs den Linien 10-10 in Fig. 11;
- Fig. 11: einen Schnitt längs Linie 11-11 in Fig. 10;
- Fig. 12: einen Schnitt längs Linie 12-12 in Fig. 10;
- Fig. 13: einen Schnitt längs Linie 13-13 in Fig. 10;
- Fig. 14: einen Schnitt längs Linie 14-14 in Fig. 10;
- Fig. 15: einen Schnitt längs Linie 15-15 in Fig. 10 und
- Fig. 16: einen Schnitt längs Linie 16-16 in Fig. 10.

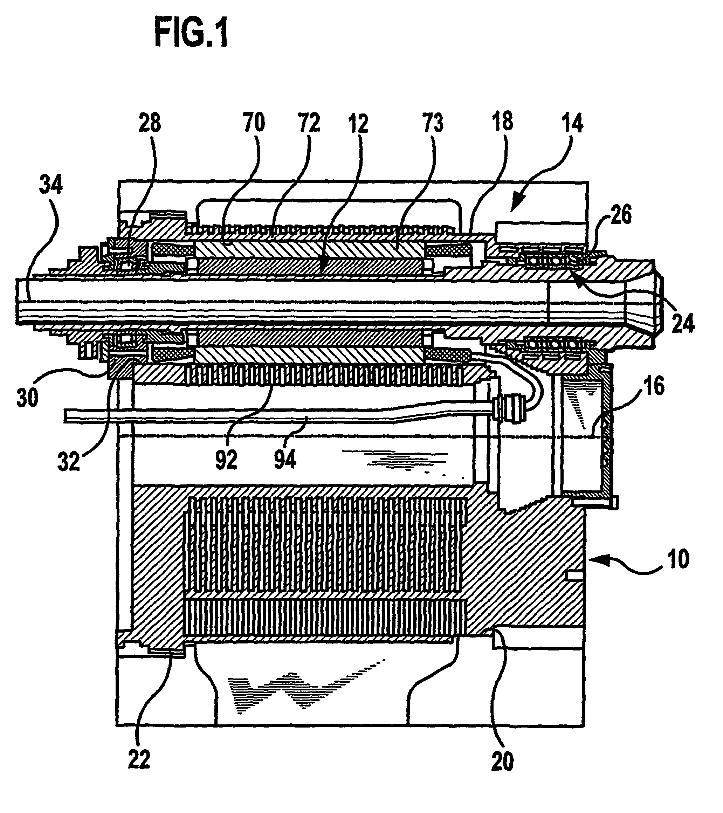

Ein in Fig. 1 dargestelltes erstes Ausführungsbeispiel eines als Ganzes mit 10 bezeichneten Antriebsgehäuses für einen als Ganzes mit 12 bezeichneten Werkzeugmaschinenantrieb stellt eine Spindeltrommel dar, in welcher als Werkzeugmaschinenantriebe eine Vielzahl von Motorspindeln angeordnet ist.

Dabei ist die Spindeltrommel 10 als Ganzes in einem Teil eines Maschinengestells bildenden Ständer 14 um eine Spindeltrommelachse 16 drehbar, jedoch in den einzelnen Drehstellungen fixierbar gelagert.

Die Lagerung der Spindeltrommel 16 in dem Ständer 14 erfolgt zum Teil durch äußere Tragflächen 18, die an korrespondierenden Tragflächen 20 des Ständers 14 anliegen.

Ferner ist die das Antriebsgehäuse darstellende Spindeltrommel 10 durch einen äußeren Zahnkranz 22, in welchen ein zeichnerisch nicht dargestelltes Zahnritzel eingreift, zu Drehbewegungen um die Spindeltrommelachse 16 antreibbar.

Die als Spindelmotor 12 ausgebildete Arbeitsspindel 12 ist ihrerseits durch ein vorderes Spindellager 24, das sich an einem ersten Lagersitz 26 der Spindeltrommel 10 abstützt gelagert und durch ein hinteres Spindellager 28, welches sich über einen Haltering 30 an einem zweiten Lagersitz 32 der Spindeltrommel abstützt um eine Spindelachse 34 drehbar in der Spindeltrommel 10 gelagert.

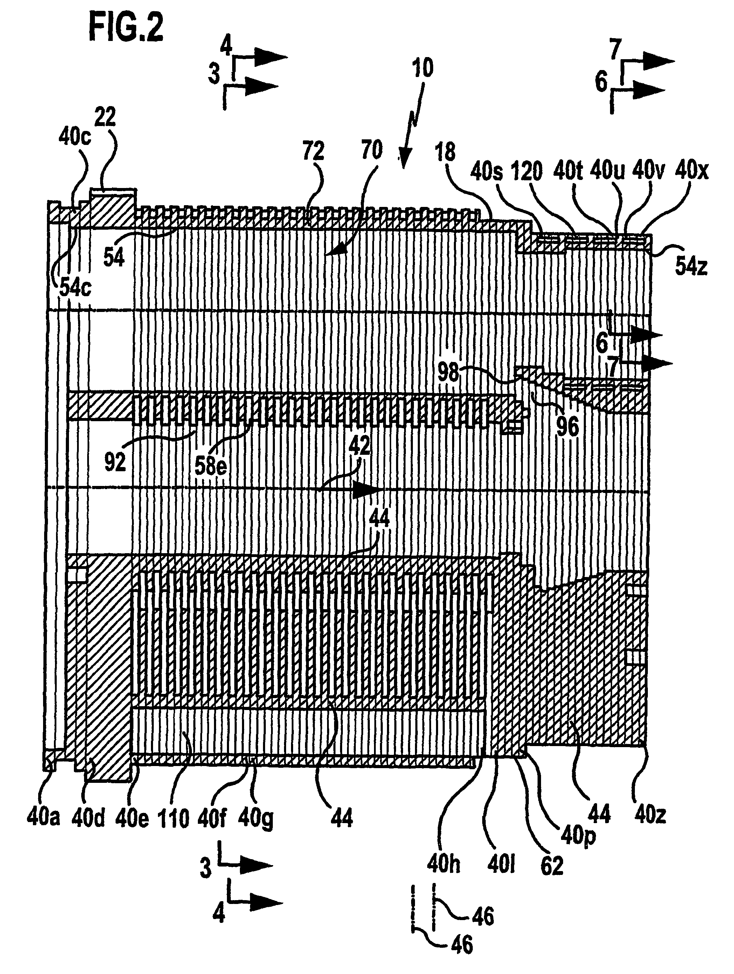

Wie in den Fig. 2, 3 und 4 dargestellt, ist das als Spindeltrommel ausgebildete Antriebsgehäuse 10 aus einer Vielzahl von Segmenten 40a bis 40z gebildet, die alle aus Flachmaterial, beispielsweise Stahlplatten, ausgeschnitten und in einer in diesem Fall parallel zur Spindeltrommelachse 16 verlaufenden Stapelrichtung 42 aufeinander gestapelt und stoffschlüssig, beispielsweise durch Löten mittels eines Hartlotprozesses, im Bereich von Überlappungsflächen 44 zwischen benachbarten, aneinander anliegenden Segmenten 40 miteinander verbunden sind, wobei zur stoffschlüssigen Verbindung der Segmente 40 Überlappungsflächen 44 Kapillarspalte bilden, in welche das Lotmaterial beim Erhitzen einfließt und sich in diesen über die gesamten Überlappungsflächen 44 verteilt.

Vorzugsweise sind dabei die einzelnen Segmente 40 mit zueinander planparallelen Oberflächen versehen und erstrecken sich in in senkrecht zur Stapelrichtung 42 verlaufenden Stapelebenen 46, wobei deren Dicke in der Stapelrichtung 42 frei variieren kann.

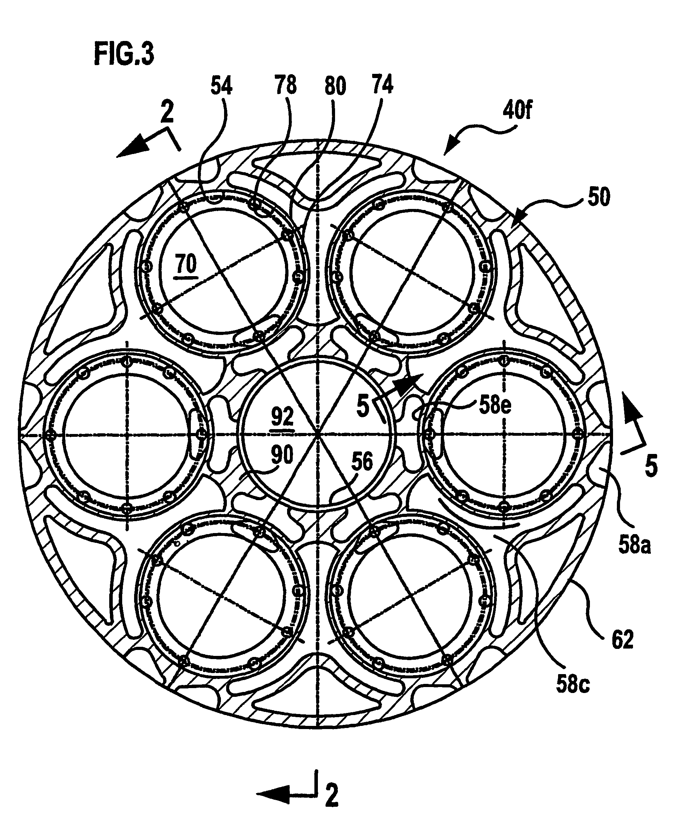

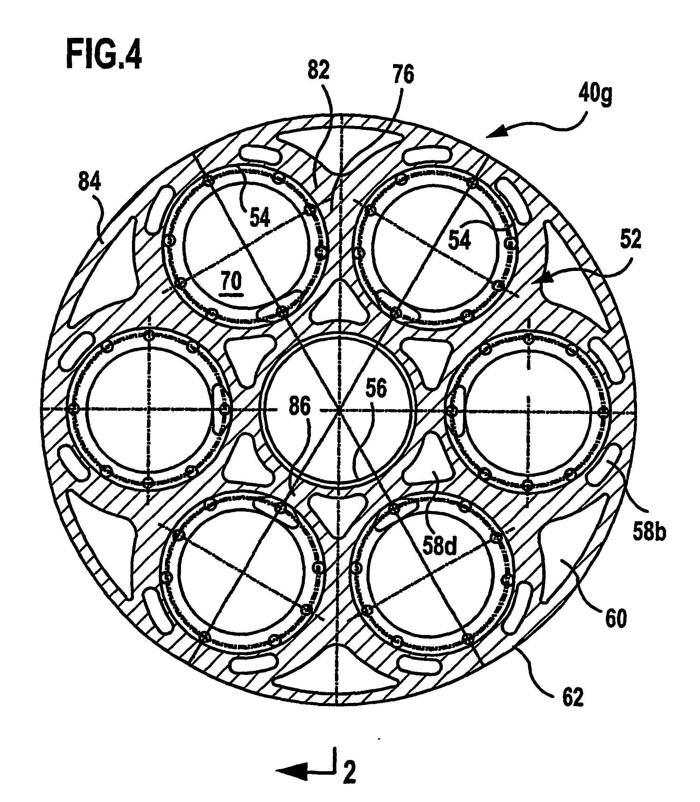

Vorzugsweise sind, wie in Fig. 3 und 4 dargestellt, die Segmente 40e bis 40h durch als Ganzes mit 50 und 52 bezeichnete Materialstegsysteme gebildet, die mit einer Vielzahl von Ausschnitten 54, 56, 58 und 60 versehen sind, die sich jeweils über die gesamte Dicke der Materialstegsysteme 50 und 52 durch das jeweilige Segment 40 hindurch erstrecken und vorzugsweise durch Laserschneiden des Flachmaterials, insbesondere des Flachstahls hergestellt sind.

Darüber hinaus ist auch eine Außenkontur 62 der Segmente 40 durch Laserschneiden hergestellt.

Wie in Fig. 2 verdeutlicht, bilden beispielsweise die als Aufnahmeausschnitte dienenden Ausschnitte 54c bis 54z insgesamt eine sich parallel zur Stapelrichtung 42 erstreckende Ausnehmung 70 zur Aufnahme eines Werkzeugmaschinenelements, in diesem Fall der Arbeitsspindel 12, wobei sich die Ausnehmung 70 durch das gesamte Antriebsgehäuse 10 hindurch erstreckt.

Die Ausnehmung 70 ist dabei im Bereich zwischen dem Segment 40e bis 40h durch eine gekühlte Wand 72 umschlossen, welche durch einander abwechselnde Wandstege 74, dargestellt am Beispiel des Segments 40f und Tragstege 76, dargestellt am Beispiel des Segments 40g, gebildet ist.

Um eine möglichst effiziente Kühlung des Werkzeugmaschinenantriebs zu erreichen, sitzt vorzugsweise ein Stator 73 desselben unmittelbar an der gekühlten Wand 72 und ist somit in der Lage, die Abwärme unmittelbar in die gekühlte Wand 72 einzuleiten.

Die Wandstege 74 erstrecken sich dabei zu einem wesentlichen Teil um die Ausnehmung 70 herum und weisen in den Stapelebenen 46 eine Breite auf, die deutlich geringer ist als eine Breite der Tragstege 76, die sich ebenfalls im wesentlichen geschlossen um die Ausnehmung 70 herum erstrecken.

Die Wandstege 70 trennen dabei in den als Kühlkanalausschnitte dienenden Ausschnitten 58 vorhandenes Kühlmedium von der Ausnehmung 70, wobei die Wandstege 74 so ausgebildet sind, daß sie eine gute Wärmeleitung zwischen einer zur Bildung einer inneren, dem Werkzeugmaschinenantrieb 12 zugewandten Wandfläche beitragenden Innenkontur 78 und einer dem Kühlmedium zugewandten Außenkontur 80 gewährleisten, um effizient die Wärme von der Innenfläche der gekühlten Wand 72 abführen zu können.

Dagegen weisen die Tragstege 76 in den Stapelebenen 46 eine größere Breite auf und erstrecken sich außerdem zwischen in demselben Segment 40g nebeneinanderliegenden Kühlkanalausschnitten 54, so daß sie um jeden Ausschnitt 54 herum einen Tragring 82 bilden, welcher zwischen einem äußeren, die Außenkontur 62 des Segments 40g bildenden Außenring 84 und einem die Tragringe 82 im Inneren des Antriebsgehäuses abstützenden Innenring 86 liegen, welcher den Ausschnitt 56 umschließt.

Somit bilden in den Segmenten 40g die die Ausschnitte 54 umschließenden Tragringe 82, der Außenring 84 und der Innenring 86 das Materialstegsystem 52 desselben.

Dagegen wird das Materialstegsystem 50 des Segments 40f einerseits durch die bereits beschriebenen Wandstege 74 gebildet, die die Aufnahmeausschnitte 54 im wesentlichen umschließen und in einen zur Außenkontur 62 beitragenden äußeren Ring 88 übergehen und in einem Innenbereich der Segmente 40f über Zwischenstege 90 miteinander verbunden sind.

Das Materialstegsystem 50 des Segments 40f trägt nur in geringem Maße zur Stabilität des Antriebsgehäuses 10 in Richtung quer zur Stapelrichtung bei, während die überwiegenden Beiträge zu dieser Stabilität durch das Materialstegsystem 52 des Segments 40g geliefert werden.

Allerdings verbindet jedes Materialstegsystem 50 zwei beidseitig desselben angeordnete Materialstegsysteme 52, so daß insgesamt die Materialstegsysteme 50 und 52 sämtlicher Segmente 40, beispielsweise der Segmente 40e bis 40h, ein räumlich zusammenhängendes selbsttragendes Tragwerk bildet, das in der Stapelrichtung 42 aufgrund der aufeinanderliegenden Segmente 40 ohnehin eine große Stabilität aufweist und durch die alternierend zwischen den Segmenten 40f mit den Materialstegsystemen 50 angeordneten Segmente 40g mit Materialstegsystemen 52 auch quer zur Stapelrichtung 42 eine große Stabilität aufweist.

Im Inneren der Ausschnitte 54, die die jeweiligen Ausnehmungen 70 zur Aufnahme der Werkzeugmaschinenantriebe 12 bilden, bilden die Ausschnitte 56 der Segmente 40 eine Ausnehmung 92, die sich ebenfalls in Stapelrichtung durch das gesamte Antriebsgehäuse 10 hindurcherstreckt und, wie in Fig. 1 dargestellt, zur Aufnahme von Maschinenelementen 94, beispielsweise Zuleitungen zu den Werkzeugmaschinenantrieben 12 dient.

Dabei ist vorzugsweise die Ausnehmung 92 mit den jeweiligen Ausnehmungen 70 über einen Seitenkanal 96 verbunden, welcher im Bereich der Segmente 40l bis 40p durch geeignet geformte Ausschnitte 98 gebildet ist und dabei vorzugsweise schräg, insbesondere in einem spitzen Winkel zur Stapelrichtung 42 von der Ausnehmung 92 in die jeweilige Ausnehmung 70 verläuft.

Ferner dient die Ausnehmung 92, wie noch später dargelegt, zur Ableitung eines Kühlmediums.

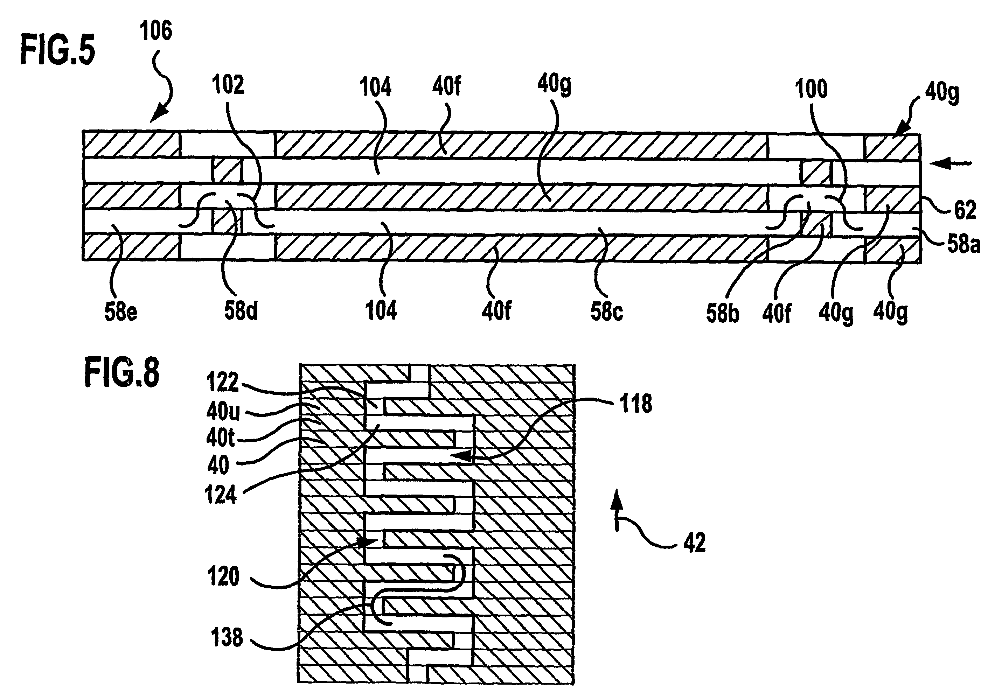

Zur effizienten Kühlung der gekühlten Wand 72, insbesondere im Bereich der Wandstege 74 sind, wie in Fig. 3 und 4 dargestellt, die Segmente 40g und 40f mit den als Kühlkanalausschnitte ausgebildeten Ausschnitten 58 versehen, die so angeordnet sind, daß die Ausschnitte 58A, 58C und 58E im Segment 40f mit den Ausschnitten 58B und 58D im Segment 40g teilweise überlappen und insgesamt einen mäanderförmig quer zur Stapelrichtung 42 verlaufenden Kühlkanalabschnitt 104 bilden, wie im einzelnen in Fig. 5 ausschnittsweise dargestellt.

So tritt in den Ausschnitt 58A des Segments 40f ein Kühlmedium von der Außenkontur 62 her in den durch den Ausschnitt 58A gebildeten Zwischenraum zwischen zwei Segmenten 40g ein und hat dann aufgrund der Überlappung des Ausschnitts 58A mit dem Ausschnitt 58B im Segment 40g die Möglichkeit, durch den Ausschnitt 58B hindurch einen Mäander 100 zu bilden, und dann wieder in den Ausschnitt 58C einzutreten.

Dann strömt das Kühlmedium, zum Beispiel Kühlluft, längs des Ausschnitts 58C im Segment 40f in den Ausschnitt 58D im Segment 40g wobei das Kühlmedium dann wiederum in Form eines Mäanders 102 durch den Ausschnitt 58D hindurchtritt, um wieder in den Ausschnitt 58E des Segments 40f einzutreten und aufgrund der Tatsache, daß das Segment 40e zur Ausnehmung 92 hin offen ist, in die Ausnehmung 92 einzutreten, durch welche dann eine Abfuhr des Kühlmediums beispielsweise entgegengesetzt zur Stapelrichtung 42 erfolgt.

Damit hat die Ausnehmung 92 sowohl die Funktion einer Aufnahme als auch eines Kühlkanalabschnitts.

Somit bilden die Ausnehmungen 58A bis E zweier benachbarter Segmente 40f und 40g einen als Ganzes mit 104 bezeichneten Kühlkanalabschnitt, der mit seiner Hauptrichtung quer zur Stapelrichtung 42 verläuft und dabei in Stapelrichtung zwei Mäander 100 und 102 ausbildet und sich von der Außenkontur 62 des Antriebsgehäuses 10 bis zur Ausnehmung 92 hin erstreckt.

Dabei erfolgt durch das durch diesen Kühlkanalabschnitt 104 strömende Kühlmedium eine effiziente Kühlung, insbesondere der Wandstege 74 und somit aufgrund deren geringer Breite in den Stapelebenen 46 eine effiziente Kühlung der Wand 72 insgesamt, die abschnittsweise von den Wandstegen 74 gebildet wird.

Die Kühlkanalabschnitte 104 verlaufen jedoch nicht isoliert voneinander, sondern aufgrund der Tatsache, daß auf ein Segment 40g wiederum ein dem Segment 40f entsprechendes Segment folgt besteht im Bereich der deckungsgleich zueinander liegenden Ausschnitte 58B und 58D und der jeweiligen Überlappung dieser Ausschnitte 58B und 58D mit den Ausschnitten 58A, 58C und 58E auch in Stapelrichtung 52 eine Verbindung zwischen den einzelnen Kühlkanalsegmenten 104, die somit insgesamt ein zusammenhängendes Kühlkanalsystem 106 bilden, das einerseits die Kühlkanalabschnitte 104 und zusätzlich auch noch die Ausnehmung 92 als Zentralkanal umfaßt.

Darüber hinaus bilden die Ausschnitte 60 in den einzelnen Segmenten, die in allen Segmenten 40e bis 40h vorzugsweise deckungsgleich liegen, ebenfalls einen Kanal 110, der jedoch beispielsweise als Hohlraum zur Gewichtserspamis dient.

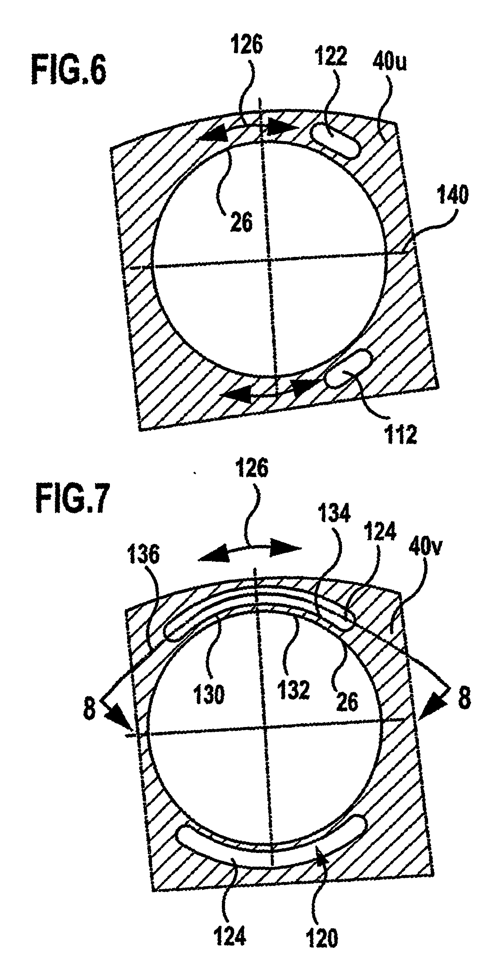

In dem erfindungsgemäßen Antriebsgehäuse 10 ist ferner noch im Bereich des Lagersitzes 26, beispielsweise zwischen den Segmenten 40s und 40z ein zweites Kühlkanalsystem 120 vorgesehen, welches, wie in Fig. 6 bis 8 dargestellt, beispielsweise in einem Segment 40u einen Ausschnitt 122 aufweist, weicher sich beispielsweise lediglich durch das Segment 40u erstreckt und mit einem Ausschnitt 124 im Segment 40t überlappt, der sich in azimutaler Richtung 126 um den Lagersitz 26 erstreckt, wobei zwischen dem Ausschnitt 124 und dem Lagersitz 26 wiederum ein Wandsteg 130 verbleibt, welcher in Richtung der Stapelebenen 46 eine geringe Breite aufweist, um einen möglichst guten Wärmeübergang zwischen einer Innenkontur 132 des Wandstegs und eine den Ausschnitt 124 begrenzenden Außenkontur 134 des Wandstegs zu erreichen.

Somit besteht mit dem Kühlkanalsystem 120 die Möglichkeit, einen sich in Stapelrichtung 42 erstreckenden Kühlkanalabschnitt 118, gebildet durch die Ausschnitte 122 und 124 aufeinanderfolgender Segmente 40 zu realisieren, welcher in einer gekrümmten Fläche 136 liegende Mäander 138 aufweist, die quer zur Stapelrichtung 42 verlaufen.

Um eine möglichst symmetrische Kühlung des Lagersitzes 26 zu erreichen, werden derartige Kühlsysteme 120 durch an einer Mittelebene 140 durch den Lagersitz gespiegelte Ausschnitte realisiert, so daß eine im wesentlichen symmetrische Kühlung des Lagersitzes 26, welcher das vordere Spindellager 24 aufnimmt, erreichbar ist.

Die Segmente 40 dienen jedoch nicht nur dazu, Ausnehmungen 70 und 90 zur Aufnahme von Werkzeugmaschinenantrieben 12 oder Maschinenelementen oder Kühlkanalsysteme 106 oder 120 in einem Antriebsgehäuse 10 zu realisieren, sondern können auch dazu dienen, die Tragflächen 18 zur Lagerung des Antriebsgehäuses 10 zu bilden, wobei beispielsweise die Tragflächen 18 durch die Außenkontur 62 der Segmente 40l bis 40p gebildet wird.

Darüber hinaus besteht auch die Möglichkeit, ein Segment 40d so auszubilden, daß dessen Außenkontur die Form des Zahnkranzes 22 aufweist, der dazu dient, das gesamte Antriebsgehäuse 10 drehend in dem Ständer 14 anzutreiben, so daß der Zahnkranz 22 in diesem Fall nicht, wie bei konventioneller Technologie als separates Teil auf das Antriebsgehäuse 10 aufgesetzt ist, sondern durch das Segment 40d integraler Bestandteil desselben ist.

Darüber hinaus besteht auch die Möglichkeit, den Zahnkranz 22 durch mehrere Segmente 40 zu realisieren, wobei die Verzahnung des Zahnkranzes 22 unmittelbar beim Ausschneiden des Segments 40d oder der diesem entsprechenden Segmente 40 aus Flachmaterial zumindest in ihrer Grundform herstellt wird.

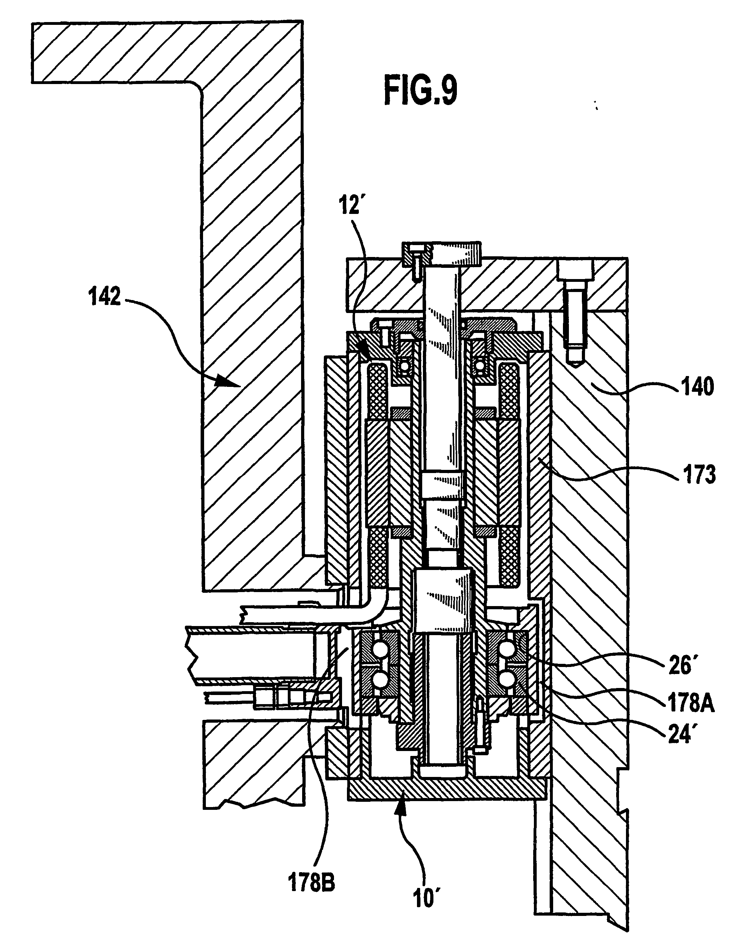

Ein in Fig. 9 dargestelltes Ausführungsbeispiels eines als Ganzes mit 10' bezeichneten Antriebsgehäuses für einen als Ganzes mit 12' bezeichneten Werkzeugmaschinenantrieb, in diesem Fall einen Antrieb für einen Schlitten 140, ist an einem Maschinengestell 142 gehalten.

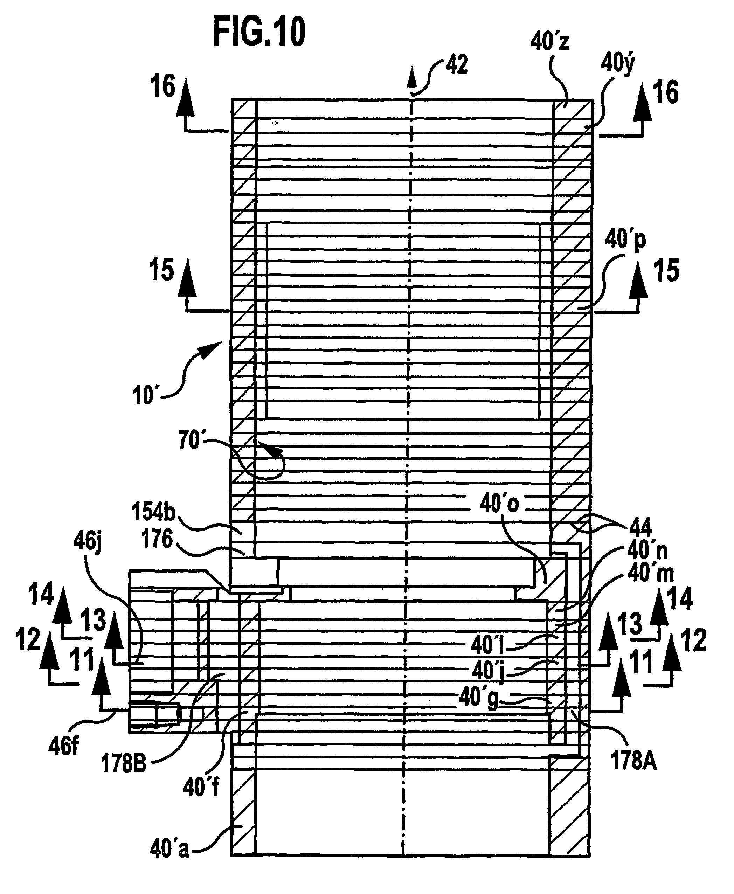

Wie in Fig. 10 dargestellt, ist dabei das Antriebsgehäuse 10' ebenfalls aus einer Vielzahl von Segmenten 40'a bis 40'z gebildet, die alle aus Flachmaterial, beispielsweise Stahlplatten, ausgeschnitten und in der Stapelrichtung 42 aufeinander gestapelt sowie stoffschlüssig, beispielsweise durch Löten mittels eines Hartlotprozesses im Bereich von Überlappungsflächen 44 zwischen benachbarten Segmenten, miteinander verbunden sind, wie dies bereits ausführlich im Zusammenhang mit dem ersten Ausführungsbeispiel beschrieben ist.

Dabei erstrecken sich die einzelnen Segmente 40' mit zueinander planparallelen Oberflächen ebenfalls parallel zu senkrecht zur Stapelrichtung 42 verlaufenden Stapelebenen 46, wobei wie beim ersten Ausführungsbeispiel die Dicke der Segmente in der Stapetrichtung 42 frei variieren kann.

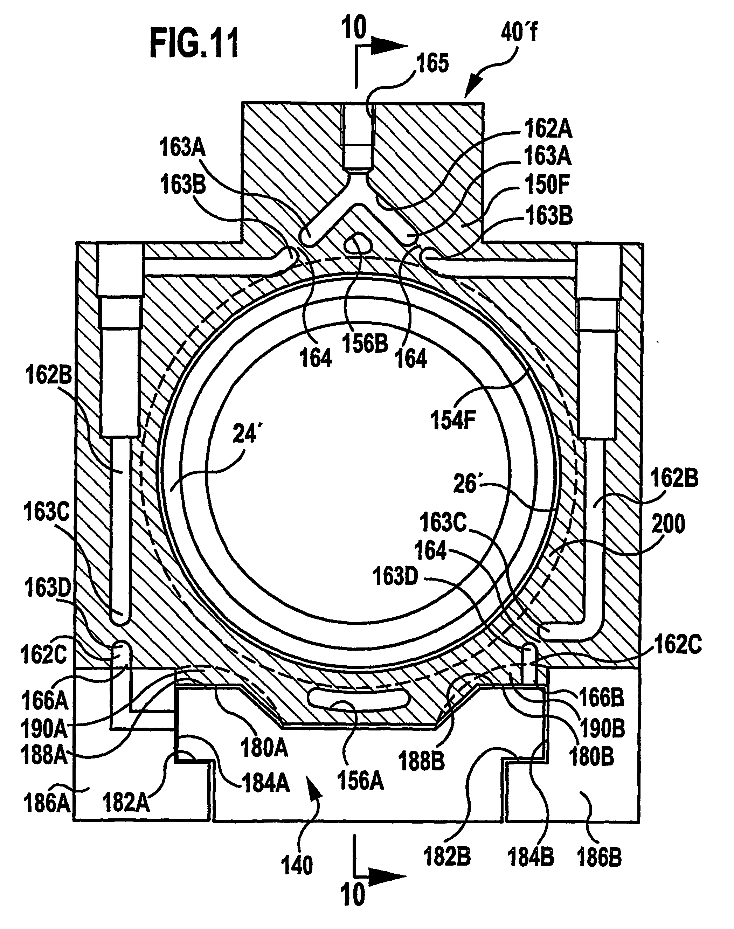

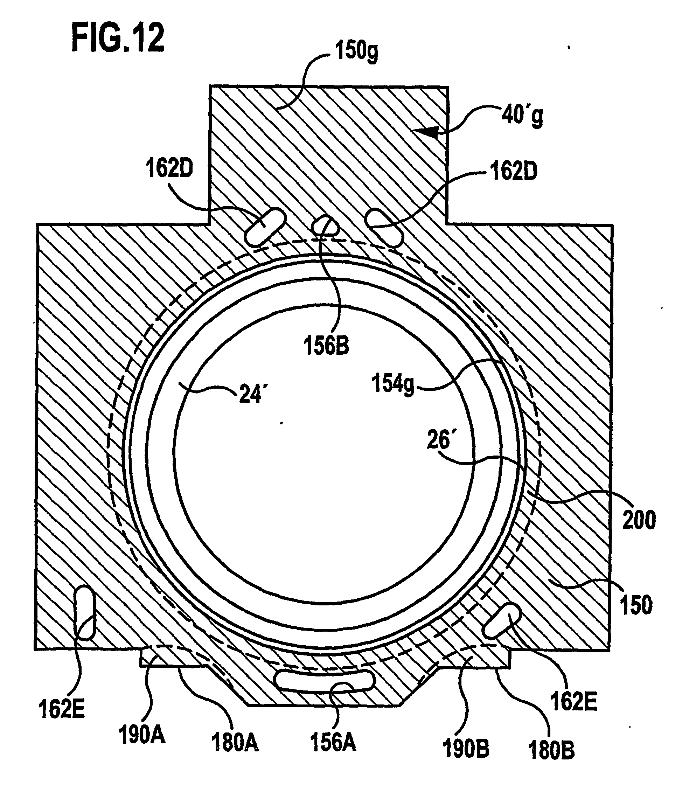

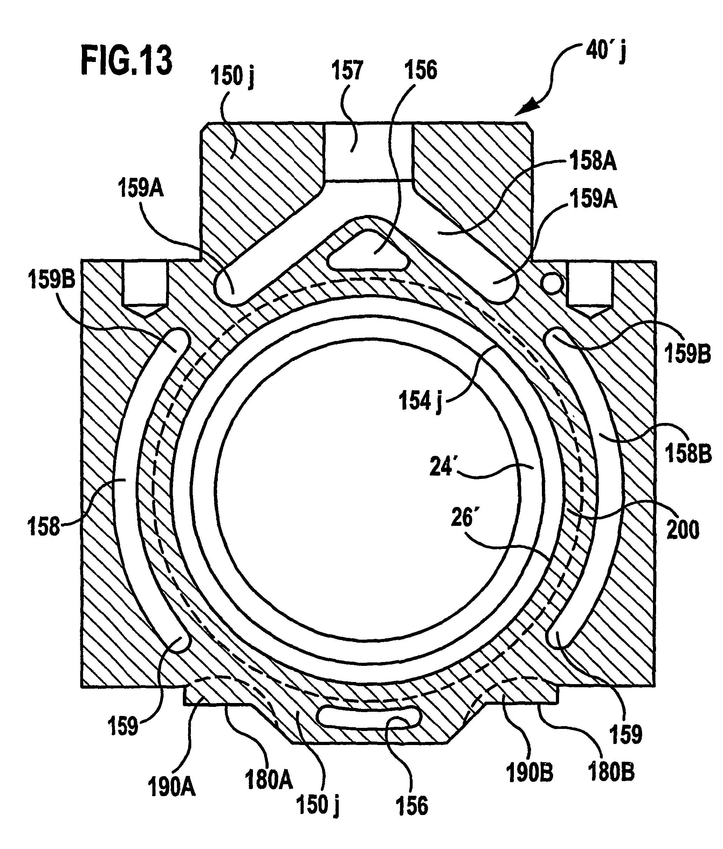

Wie in Fig. 11 dargestellt, umfaßt beispielsweise das Segment 40f ein Materialstegsystem 150f, das mit einer Vielzahl von Ausschnitten 154, 156A und 156B sowie 162A, 162B und 162C versehen ist.

Das Materialstegsystem 150f weist jedoch, in gleicher Weise wie beim ersten Ausführungsbeispiel beschrieben, insgesamt zusammenhängende Materialstege auf.

Dabei bilden beispielsweise die Ausschnitte 162A bis 162C einen zu einem wesentlichen Teil in der Stapelebene 46f durch das Antriebsgehäuse 10' verlaufenden Schmiermittelkanal, welcher einer Eintrittsöffnung 165 zugeführtes Schmiermittel um die Ausschnitte 156B sowie 154 herum Austrittsöffnungen 166A und 166B im Antriebsgehäuse 10' zuführt.

Allerdings sind die Ausschnitte 162A, 162B und 162C nicht miteinander verbunden, um zu gewährleisten, daß das Materialstegsystem 150 des Segments 40'f zusammenhängend bleibt.

Damit, daß das Materialstegsystem 150f zusammenhängend ausgebildet ist, sind jeweils zwischen einander zugewandten Enden 163A und 163B der Ausschnitte 162A und 162B Materialstegbereiche 164 vorgesehen und zwischen einander zugewandten Enden 163C und 163D der Ausschnitte 162B und 162C ebenfalls Materialstegbereiche 164, die jeweils die Enden 163A und 163B sowie 163C und 163D voneinander trennen.

Aus diesem Grund sind in dem nächstfolgenden Segment 40'g dargestellt in Fig. 12 zusätzlich zu den Ausschnitten 154 sowie 156A und 156B Ausschnitte 162D und 162E vorgesehen, welche mit den Enden 163A und 163B sowie 163C und 163D der Ausschnitte 162A und 162B bzw. 162B und 162C überlappend angeordnet sind und somit Verbindungen zwischen diesen Ausschnitten darstellen, um einen Schmiermittelfluß von dem Ausschnitt 162A in die Ausschnitte 162B und von den Ausschnitten 162B in die Ausschnitte 162C zuzulassen.

Die Ausschnitte 162D und 162E dienen somit dazu, die Materialstegbereiche 164 und 164 zwischen den einander zugewandten Enden 163A und 163B bzw. 163C und 163D der Ausschnitte 162A und 162B bzw. 162B und 162C zu überbrücken.

Bei einem Segment 40'j, dargestellt in Fig. 13, sind die Ausschnitte 162 für Schmiermittel nicht mehr vorhanden, sondern es ist ein Ausschnitt 158A vorgesehen, welcher ausgehend von einem Kühllufteinlaß 157 sich aufgabelt bis zu Enden 159A, die Enden 159B der Ausschnitte 158B zugewandt angeordnet sind, wobei die Ausschnitte 158B auf gegenüberliegenden Seiten des Ausschnitts 154j liegen.

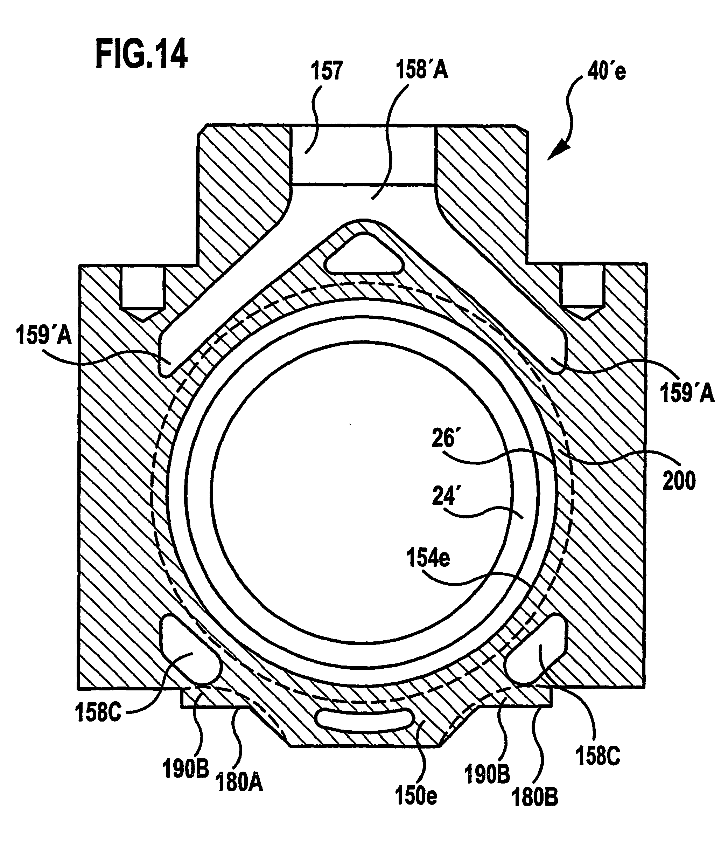

Im Segment 40'l, vergrößert dargestellt in Fig. 14, ist der Ausschnitt 158'A nochmals vergrößert ausgebildet, wobei dessen gabelförmige Abschnitte sich mit ihren Enden 159'A soweit erstrecken, daß diese mit den Enden 159B des Segments 40'j und 40'k überlappen, so daß der Ausschnitt 158'A im Segment 40'l die Enden 159A und 159B zwischen den Ausschnitten 158A und 158B im Segment 40'j überbrückt.

Ferner sind noch Ausschnitte 158C vorgesehen, welche mit den Enden 159B gegenüberliegenden Enden 159C der Ausschnitte 158B überlappend angeordnet sind.

In ähnlicher Weise sind die Segmente 40'm und 40'n ausgebildet.

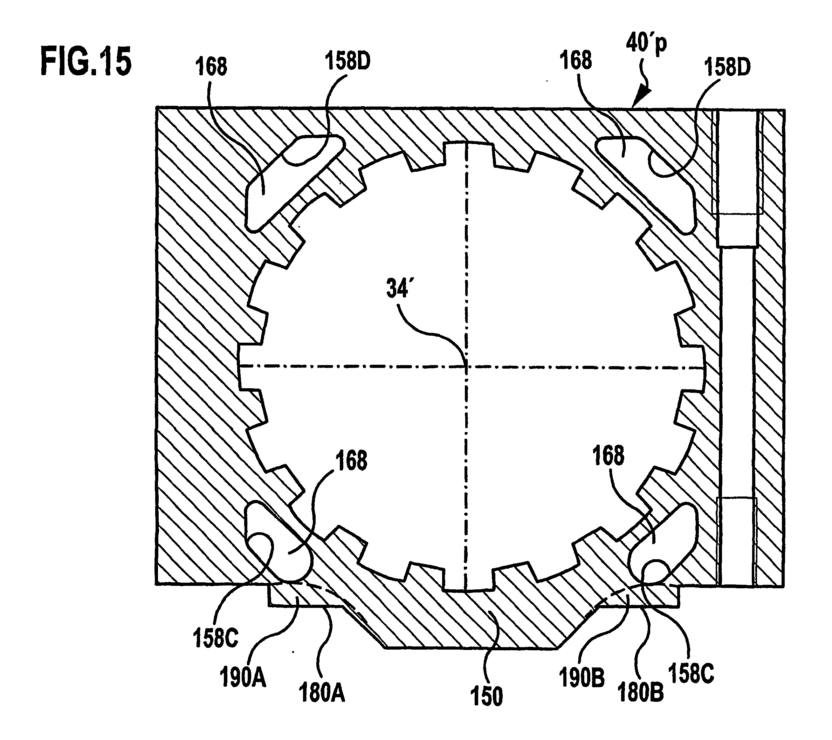

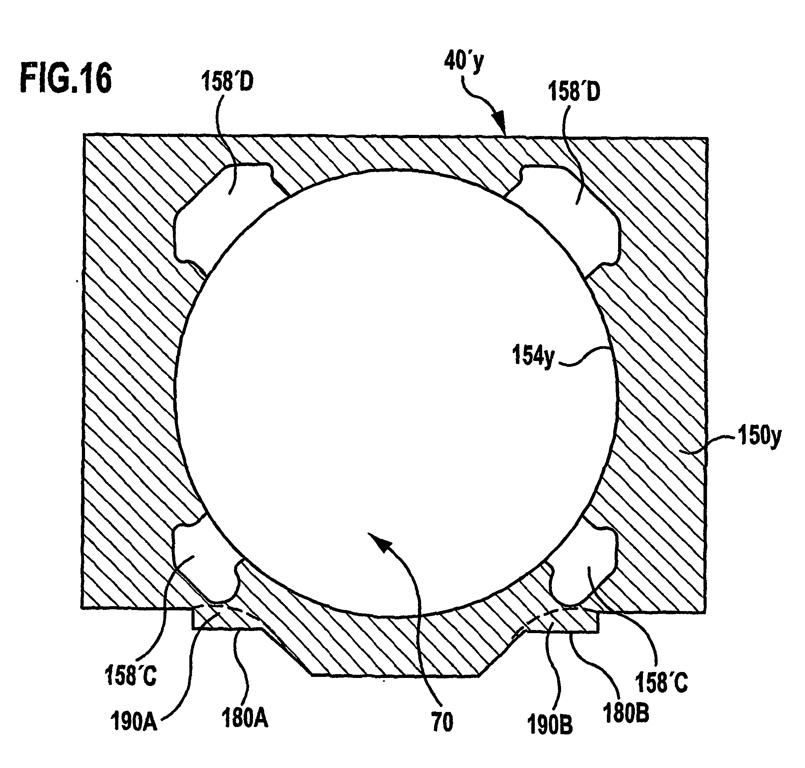

Wie in Fig. 15 exemplarisch am Segment 40'p dargestellt, erstrecken sich ausgehend von den Enden 159'A des Ausschnitts 158'A der Segmente 40'I bis 40'n durch in den nachfolgenden Segmenten ausgebildete und jeweils überlappend angeordnete Ausschnitte 158D sowie durch die überlappend angeordneten Ausschnitte 158C, die ebenfalls im Segment 40'p vorhanden sind, Zufuhrkanäle 168 in der Stapelrichtung 42 längs des Antriebsgehäuses 10', und zwar bis zu einem Segment 40'y, dargestellt in Fig.16, bei welchem sich die Ausschnitte 158'D und 158'C in eine vom Ausschnitt 154y umschlossene Ausnehmung 70 öffnen, die sich in der Stapelrichtung 42 ebenfalls im wesentlichen durch das gesamte Antriebsgehäuse 10' erstreckt.

Über den Kühllufteinlaß 157 zugeführte Kühlluft wird somit über die Ausschnitte 158A und 158'A sowie die Ausschnitte 158B auf alle vier Kanäle 168 verteilt und längs des Antriebsgehäuses 10' in Stapelrichtung 42 bis zum Segment 40'y geführt und dort über die Ausschnitte 158'D und 158'C in die Ausnehmung 70 abgegeben.

Wie in Fig. 9 dargestellt ist in der Ausnehmung 70 ein Elektromotor als Werkzeugmaschinenantrieb 12' angeordnet, welcher seinerseits nunmehr von der von dem Segment 40'y in Richtung des Segments 40'o strömenden Kühlluft durchströmt wird.

Ferner ist ein Stator 173 durch ein Segmentpaket mit dem Segment 40'p entsprechenden Segmenten gehalten, bei welchen der Ausschnitt 154p um die in Stapelrichtung 42 verlaufende Motorachse 34' herum gezahnt ausgebildet und weist Vorsprünge 155 auf, zwischen denen Ausnehmungen 153 liegen. Dabei tragen Vorsprünge 155 den Stator 173, während in den Ausnehmungen 153 die Kühlluft in Stapelrichtung 42 längs des Stators 173 in Richtung zum Segment 40'o strömen kann, bei welchem dann der Ausschnitt 154b so geformt ist, daß eine Austrittsöffnung 176 entsteht, über welche dann die Kühlluft austreten kann.

Die Kühlluft kann ferner noch über die miteinander überlappenden Ausschnitte 156A und 156B, die Kanäle 178A bzw. 178B bilden, den Lagersitz 26' für das Lager 24' des Werkzeugmaschinenantriebs 10' kühlend umströmen und auf einer in Stapelrichtung 42 dem Kühllufteinlaß 157 gegenüberliegenden Seite aus dem Antriebsgehäuse 10' austreten.

Wie in den Fig. 11 bis 16 dargestellt, bildet das aus den Segmenten 40' aufgebaute Antriebsgehäuse 10' unmittelbar zwei im Abstand voneinander verlaufende Führungsflächen 180A und 180B, welche sich im wesentlichen über die gesamte Länge des Antriebsgehäuses 10' in Stapelrichtung 42 erstrecken.

Diese Führungsflächen 180a und 180b dienen dazu, den durch den Werkzeugmaschinenantrieb 12' bewegbaren Schlitten 140 exakt zu führen, wobei die Führungswirkung der Führungsflächen 180a und 180b, wie in Fig. 11 exemplarisch dargestellt, noch ergänzt wird durch diesen gegenüberliegende und zugewandte Führungsflächen 182A und 182B sowie seitliche Führungsflächen 184A und 184B, die an Führungsleisten 186A und 186B angeformt sind, wobei diese Führungsleisten 186A und 186B mit dem Antriebsgehäuse 10' verbunden sind.

Die Führungsflächen 180A und 180B sind dabei Gleitflächen für diesen zugewandte Gleitflächen 188A und 188B des Schlittens 140 und müssen daher zwangsläufig geschaffene und gehärtete Flächen sein.

Aus diesem Grund sind die Materialstegsysteme 150 aller Segmente 40' aus einem härtbaren Material, vorzugsweise einem härtbaren Stahl ausgebildet, welcher sich zweckmäßigerweise nach Herstellung des Antriebsgehäuses 10' aus den Segmenten 40' härten läßt.

Vorzugsweise erfolgt dabei kein Härten der gesamten Materialstegsysteme 150 der jeweiligen Segmente 40', sondern ein Härten in einem sich von der herzustellenden Führungsfläche 180A und 180B ausgehend in das Materialstegsystem 150 hinein erstreckenden Bereich 190A, 190B und somit ein selektives und bereichsweises Härten des Materialstegsystems 150.

Ein bevorzugtes Härteverfahren ist dabei in Induktionshärten, welches es beispielsweise erlaubt, die sich an die herzustellenden Führungsflächen 180A, 180B angrenzenden Bereiche 190A bzw. 190B gezielt zu härten.

Eine Alternative zum Induktionshärten wären beispielsweise andere selektive Härteverfahren.

Obwohl sich die Führungsflächen 180A, 180B in der Stapelrichtung 42 über eine Vielzahl von Segmenten 40' hinwegerstrecken, ergibt das Härten der Bereiche 190A, 190B, die sich ebenfalls in der Stapelrichtung 42 über das gesamte Antriebsgehäuse 10' hinwegerstrecken, in der Stapelrichtung keinen insbesondere im Bereich aneinander angrenzender Segmente 40' schwankenden Härteverlauf, sondern in der Stapelrichtung 42 einen Härteverlauf, der innerhalb einer Schwankungsbreite von 20%, noch besser von 10%, der maximalen Härte liegt.

Darüber hinaus ist es auch bei Segmenten 40' aus einem härtbaren Material denkbar, die Teilsegmente 40'f bis 40'I, welche mit ihrem Ausschnitt 154F bis 154I den Lagersitz 26' für das Lager 24' des Werkzeugmaschinenantriebs 12' bilden, ebenfalls in einem sich an den Ausschnitt 154 anschließenden und in das Materialstegsystem 150 hineinerstreckenden Bereich 200 zu härten, um eine höhere Stabilität im Bereich des Lagersitzes 26' zu erreichen.

Wie in Fig. 11 außerdem dargestellt, kann die Schmiermittelzufuhr über die Ausschnitte 162 zum Schmieren der Führung des Schlittens 140 eingesetzt werden, wobei einerseits eine Schmierung im Bereich der Führungsflächen 180 erfolgt und andererseits eine Schmierung in den von den Führungsleisten 186 bereitgestellten Führungsflächen 182 und 184.

## Patentansprüche

1. Gehäuse, umfassend
eine Vielzahl von in einer Stapelrichtung (42) gestapelten, aus Flachmaterial ausgeschnittenen und sich in Stapelebenen (46) quer zur Stapelrichtung (42) erstreckenden Segmenten(40), von denen jedes zusammenhängende Materialstegsysteme (50, 52, 150) aufweist, die derart verlaufen, daß in Stapelrichtung (42) aufeinanderfolgende Segmente (40) mit ihren Materialstegsystemen (50, 52, 150) unter Bildung von Überlappungsflächen (44) aneinander anliegen und im Bereich ihrer Überlappungsflächen (44) flächig und stoffschlüssig miteinander verbunden sind,
**dadurch gekennzeichnet, daß** zur Ausbildung des Gehäuses als Antriebsgehäuse für Werkzeugmaschinen in den Segmenten (40) Aufnahmeausschnitte (54, 56, 154) vorgesehen sind, die eine sich in der Stapelrichtung (42) innerhalb des Antriebsgehäuses (10) über die Segmente (40) hinweg erstreckende Ausnehmung (70, 92, 70') zur Aufnahme eines Werkzeugmaschinenelements (12, 94) bilden und daß ein Teil der Segmente (40) die Aufnahmeausschnitte (54) umgebende Wandstege (74) aufweist, welche mit in Stapelrichtung (42) vorausgehenden und nachfolgenden Materialstegen (52) stoffschlüssig verbundene Überlappungsbereiche (44) aufweisen und eine die Ausnehmung (70) umschließende Wand (72) mit im Bereich der Wandstege (74) verbesserter Wärmeleitung bilden.

2. Antriebsgehäuse nach Anspruch 1, **dadurch gekennzeichnet, daß** die Segmente (40) durch eine flächige Lotschicht stoffschlüssig miteinander verbunden sind.

3. Antriebsgehäuse nach Anspruch 1 oder 2, **dadurch gekennzeichnet, daß** zumindest bei einem Teil der Segmente (40) die Materialstegsysteme (50, 52) die Segmente (40) über ihre gesamte Dicke durchsetzende Ausschnitte (54, 56, 58, 60, 122, 124, 154, 156, 158, 162) aufweisen.

4. Antriebsgehäuse nach einem der voranstehenden Ansprüche, **dadurch gekennzeichnet, daß** die Materialstegsysteme (50, 52, 150) die Ausschnitte (54, 56, 58, 60, 122, 124, 154, 156, 158, 162) zumindest teilweise umschließen.

5. Antriebsgehäuse nach einem der voranstehenden Ansprüche, **dadurch gekennzeichnet, daß** sich die durch die Aufnahmeausschnitte (54, 56, 154) gebildete Ausnehmung (70, 92, 70') durch das gesamte Antriebsgehäuse (10) erstreckt.

6. Antriebsgehäuse nach einem der voranstehenden Ansprüche, **dadurch gekennzeichnet, daß** die Wandstege (74) eine die Ausnehmung (70) von einem Kühlmedium trennende Wand (72) bilden.

7. Antriebsgehäuse nach einem der voranstehenden Ansprüche, **dadurch gekennzeichnet, daß** die Wandstege (74) in den Stapelebenen (46) eine Breite aufweisen, die längs derselben um weniger als einen Faktor zwei variiert.

8. Antriebsgehäuse nach einem der voranstehenden Ansprüche, **dadurch gekennzeichnet, daß** die Wandstege (74) sich zumindest über einen Teilumfang des Aufnahmeausschnitts (54) erstrecken.

9. Antriebsgehäuse nach einem der voranstehenden Ansprüche, **dadurch gekennzeichnet, daß** die Wandstege (74) eine den Aufnahmeausschnitt (54) abgewandte Außenkontur (80) .aufweisen, deren Verlauf dem einer dem Aufnahmeausschnitt (54) zugewandter Innenkontur (78) im wesentlichen folgt.

10. Antriebsgehäuse nach einem der voranstehenden Ansprüche, **dadurch gekennzeichnet, daß** in Stapelrichtung (42) beiderseits eines Segments (40f) mit einem Wandsteg (74) Segmente (40g) mit Tragstegen (76) folgen, die in den Stapelebenen (46) breiter als die Wandstege (74) ausgebildet sind.

11. Antriebsgehäuse nach Anspruch 10, **dadurch gekennzeichnet, daß** ein Segment (40f) mit einem Wandsteg (74) zwischen zwei Segmenten (40g) mit einem Tragsteg (76) liegt.

12. Antriebsgehäuse nach einem der voranstehenden Ansprüche, **dadurch gekennzeichnet, daß** die Summe der in den Überlappungsflächen (44) flächig miteinander verbundenen Materialstegsysteme (50, 52, 150) ein räumlich zusammenhängendes selbsttragendes Tragwerk für den Werkzeugmaschinenantrieb (12) bilden.

13. Antriebsgehäuse nach Anspruch 12, **dadurch gekennzeichnet, daß** das Antriebsgehäuse das Tragwerk bildende Materialstege (82, 84, 86) aufweist, die gegenüber anderen Materialstegen (74, 90) in den Stapelebenen (46) verbreitert ausgeführt und in Hauptlastrichtungen verlaufend angeordnet sind.

14. Antriebsgehäuse nach einem der voranstehenden Ansprüche, **dadurch gekennzeichnet, daß** der Aufnahmeausschnitt (54, 154) mindestens eines der Segmente (40s ... 40z, 40'f ... 40'n) einen Lagersitz (26, 26') für ein Lager (24, 24') des Werkzeugmaschinenantriebs (12, 12') bildet.

15. Antriebsgehäuse nach Anspruch 14, **dadurch gekennzeichnet, daß** der Lagersitz (26) durch die Annahmeausschnitte (54) mehrerer Segmente (40a, 40v) gebildet ist, und zumindest ein Teil dieser Segmente (40u, 40v) Wandstege (120) mit verbessertem Wärmefluß bildet.

16. Antriebsgehäuse nach einem der voranstehenden Ansprüche, **dadurch gekennzeichnet, daß** mindestens eines der Segmente (40 e ... 40f) mit seiner Außenkontur (16) eine Tragfläche (18) für das Antriebsgehäuse (10) bildet.

17. Antriebsgehäuse nach einem der voranstehenden Ansprüche, **dadurch gekennzeichnet, daß** mindestens eines der Segmente (40d) ein positionsfestlegendes Element (22) des Antriebsgehäuses (10) bildet.

18. Antriebsgehäuse nach einem der voranstehenden Ansprüche, **dadurch gekennzeichnet, daß** zumindest ein Teil der Segmente (40g, 40f) Kühlkanalausschnitte (56, 58, 112, 114, 156, 158) aufweist, die zumindest einen Kühlkanalabschnitt (104, 118, 168) eines durch das Antriebsgehäuse (10) verlaufenden Kühlkanalsystems (106, 120) bilden.

19. Antriebsgehäuse nach Anspruch 18, **dadurch gekennzeichnet, daß** die Kühlkanalausschnitte (58, 112, 114) von in Stapelrichtung (42) aufeinanderfolgender Segmenten (40) Kühlkanalabschnitte (104, 118) bilden, die mit Umlenkungen (100, 102, 128) durch das Antriebsgehäuse (10) verlaufen.

20. Antriebsgehäuse nach Anspruch 18 oder 19, **dadurch gekennzeichnet, daß** die Kühlkanalabschnitte (104, 111) mit mehrfachen Umlenkungen (100, 102, 128) durch das Antriebsgehäuse (10) verlaufen.

21. Antriebsgehäuse nach einem der Ansprüche 18 bis 20, **dadurch gekennzeichnet, daß** der Kühlkanalabschnitt (104) ungefähr in Richtung quer zur Stapelachse (42) verläuft.

22. Antriebsgehäuse nach Anspruch 21, **dadurch gekennzeichnet, daß** der Kühlkanalabschnitt (104) sich in Richtung der Stapelrichtung (42) ausbildende Mäander aufweist und zwischen den Kühlkanalausschnitten (58) mindestens zweier Segmente (40g, 40f) wechselt.

23. Antriebsgehäuse nach Anspruch 21 oder 22, **dadurch gekennzeichnet, daß** der Kühlkanalabschnitt (104) bereichsweise in einem Segment (40f) quer zur Stapelrichtung (42) verläuft und in Stapetrichtung (42) durch die Materialstegsysteme (50, 52, 150) des vorausgehenden und des nächstfolgenden Segments (40g) abgeschlossen ist.

24. Antriebsgehäuse nach einem der Ansprüche 21 bis 23, **dadurch gekennzeichnet, daß** der Kühlkanalabschnitt (104) im Verlauf seiner Erstreckung quer zur Stapelachse (42) zumindest von einem Segment (40f) in das nächstfolgende Segment (40g) und dann zurück in das eine Segment (40f) wechselt.

25. Antriebsgehäuse nach einem der Ansprüche 18 bis 24, **dadurch gekennzeichnet, daß** ein Teil der Segmente 40u, 40v) Kühlkanalausschnitte (122, 124, 158) aufweist, welche sich zu einem in Stapelrichtung (42) verlaufenden Kühlkanalabschnitt (118, 168) ergänzen.

26. Antriebsgehäuse nach Anspruch 25, **dadurch gekennzeichnet, daß** sich die Kühlkanalabschnitte (122, 124) in den Segmenten (40u, 40v) zu einem in Stapelrichtung (42) verlaufenden, jedoch quer zur Stapelrichtung (42) mindestens einen Mäander (138) aufweisenden Kühlkanalabschnitt (118) ergänzen.

27. Antriebsgehäuse nach Anspruch 26, **dadurch gekennzeichnet, daß** der Kühlkanalabschnitt (118) eine in den Stapelebenen (46) gebogene Form aufweist.

28. Antriebsgehäuse nach Anspruch 26 oder 27, **dadurch gekennzeichnet, daß** der Kühlkanalabschnitt (118) sich quer zur Stapelrichtung (42) ausbildende Mäander (138) aufweist.

29. Antriebsgehäuse nach einem der voranstehenden Ansprüche, **dadurch gekennzeichnet, daß** zumindest bei einem Teil der Segmente (40') die Materialstegsysteme (150) aus einem härtbaren Material hergestellt sind.

30. Antriebsgehäuse nach Anspruch 29, **dadurch gekennzeichnet, daß** die Materialstegsysteme (150) aus einem nach Herstellung des Antriebsgehäuses (10') härtbaren Material hergestellt sind.

31. Antriebsgehäuse nach Anspruch 30, **dadurch gekennzeichnet, daß** das Material durch Induktionshärten härtbar ist.

32. Antriebsgehäuse nach einem der voranstehenden Ansprüche, **dadurch gekennzeichnet, daß** das Antriebsgehäuse (10') eine durch mindestens ein Segment (40') gebildete Führungsfläche (180) für ein bewegbares Maschinenelement (140) aufweist.

33. Antriebsgehäuse nach Anspruch 32, **dadurch gekennzeichnet, daß** sich die Führungsfläche (180) in Stapelrichtung (42) über mehrere Segmente (40') erstreckt.

34. Antriebsgehäuse nach Anspruch 32 oder 33, **dadurch gekennzeichnet, daß** die Führungsfläche (180) durch eine Oberfläche eines Teilbereichs (190) des Materialstegsystems (150) des jeweiligen Segments (40') gebildet ist.

35. Antriebsgehäuse nach einem der Ansprüche 32 bis 34, **dadurch gekennzeichnet, daß** die Oberfläche (180) im Bereich einer Außenkontur des jeweiligen Segments (40') liegt.

36. Antriebsgehäuse nach einem der Ansprüche 32 bis 35, **dadurch gekennzeichnet, daß** die Führungsfläche (180) durch die Oberfläche einer Schmalseite in einem Teilbereich (190) des jeweiligen Materialstegsystems (150) gebildet ist.

37. Antriebsgehäuse nach Anspruch 36, **dadurch gekennzeichnet, daß** der Teilbereich (190) des Materialstegsystems (150) gehärtet ist.

38. Antriebsgehäuse nach einem der Ansprüche 32 bis 37, **dadurch gekennzeichnet, daß** die Führungsfläche (180) eine gehärtete Fläche ist.

39. Antriebsgehäuse nach Anspruch 38, **dadurch gekennzeichnet, daß** die Führungsfläche (180) einen in Stapelrichtung (42) im wesentlichen gleichbleibenden Härteverlauf aufweist.

40. Antriebsgehäuse nach einem der Ansprüche 32 bis 39, **dadurch gekennzeichnet, daß** die Führungsfläche (180) eine Gleitführungsfläche ist.

## Claims

1. Housing, comprising
a plurality of segments (40) stacked in a stacking direction (42), cut out from flat material and extending in stacking planes (46) transversely to the stacking direction (42), each of said segments having continuous material web systems (50, 52, 150) extending in such a manner that segments (40) following one another in stacking direction (42) abut on one another with their material web systems (50, 52, 150), thereby forming overlapping surfaces (44), and are connected to one another areally and with a material fit in the area of their overlapping surfaces (44),
**characterized in that** for constructing the housing as a drive housing for machine tools receiving cutouts (54, 56, 154) are provided in the segments (40), said cutouts forming a recess (70, 92, 70') for accommodating a machine tool element (12, 94), said recess extending over the segments (40) in the stacking direction (42) within the drive housing (10), and that some of the segments (40) have wall webs (74) surrounding the receiving cutouts (54), said wall webs having overlapping surfaces (44) connected in stacking direction (42) to preceding and subsequent material webs (52) with a material fit and forming a wall (72) surrounding the recess (70) with an improved heat conduction in the area of the wall webs (74).

2. Drive housing as defined in claim 1, **characterized in that** the segments (40) are connected to one another with a material fit by means of an areal solder layer.

3. Drive housing as defined in claim 1 or 2, **characterized in that** at least in the case of some of the segments (40) the material web systems (50, 52) have cutouts (54, 56, 58, 60, 122, 124, 154, 156, 158, 162) passing through the segments (40) over their entire thickness.

4. Drive housing as defined in any one of the preceding claims, **characterized in that** the material web systems (50, 52, 150) enclose the cutouts (54, 56, 58, 60, 122, 124, 154, 156, 158, 162) at least partially.

5. Drive housing as defined in any one of the preceding claims, **characterized in that** the recess (70, 92, 70') formed by the receiving cutouts (54, 56, 154) extends through the entire drive housing (10).

6. Drive housing as defined in any one of the preceding claims, **characterized in that** the wall webs (74) form a wall (72) separating the recess (70) from a cooling medium.

7. Drive housing as defined in any one of the preceding claims, **characterized in that** the wall webs (74) have in the stacking planes (46) a width varying along the same by less than a factor of two.

8. Drive housing as defined in any one of the preceding claims, **characterized in that** the wall webs (74) extend at least over part of the circumference of the receiving cutout (54).

9. Drive housing as defined in any one of the preceding claims, **characterized in that** the wall webs (74) have an outer contour (80) facing away from the receiving cutout (54), the course of said outer contour essentially following that of an inner contour (78) facing the receiving cutout (54).

10. Drive housing as defined in any one of the preceding claims, **characterized in that** segments (40g) with supporting webs (76) follow in stacking direction (42) on both sides of a segment (40f) with a wall web (74), said supporting webs being designed to be broader than the wall webs (74) in the stacking planes (46).

11. Drive housing as defined in claim 10, **characterized in that** a segment (40f) with a wall web (74) is located between two segments (40g) with a supporting web (76).

12. Drive housing as defined in any one of the preceding claims, **characterized in that** the sum of the material web systems (50, 52, 150) connected areally to one another in the overlapping surfaces (44) forms a spatially continuous, self-supporting supporting framework for the machine tool drive (12).

13. Drive housing as defined in claim 12, **characterized in that** the drive housing has material webs (82, 84, 86) forming the supporting framework, said webs being of a broader design in comparison with other material webs (74, 90) in the stacking planes (46) and being arranged so as to extend in main load directions.

14. Drive housing as defined in any one of the preceding claims, **characterized in that** the receiving cutout (54, 154) of at least one of the segments (40s ... 40z, 40'f ... 40'n) forms a bearing seat (26, 26') for a bearing (24, 24') of the machine tool drive (12, 12').

15. Drive housing as defined in claim 14, **characterized in that** the bearing seat (26) is formed by the receiving cutouts (54) of several segments (40a, 40v) and at least some of these segments (40u, 40v) form wall webs (120) having an improved flow of heat.

16. Drive housing as defined in any one of the preceding claims, **characterized in that** at least one of the segments (40e ... 40f) forms a supporting surface (18) for the drive housing (10) with its outer contour (16).

17. Drive housing as defined in any one of the preceding claims, **characterized in that** at least one of the segments (40d) forms a position-determining element (22) of the drive housing (10).

18. Drive housing as defined in any one of the preceding claims, **characterized in that** at least some of the segments (40g, 40f) have cooling channel cutouts (56, 58, 112, 114, 156, 158) forming at least one cooling channel section (104, 118, 168) of a cooling channel system (106, 120) extending through the drive housing (10).

19. Drive housing as defined in claim 18, **characterized in that** the cooling channel cutouts (58, 112, 114) of segments (40) following one another in stacking direction (42) form cooling channel sections (104, 118) extending through the drive housing (10) with deviations (100, 102, 128).

20. Drive housing as defined in claim 18 or 19, **characterized in that** the cooling channel sections (104, 111) extend through the drive housing (10) with multiple deviations (100, 102, 128).

21. Drive housing as defined in any one of claims 18 to 20, **characterized in that** the cooling channel section (104) extends approximately in a direction transverse to the axis (42) of the stack.

22. Drive housing as defined in claim 21, **characterized in that** the cooling channel section (104) has meanders extending in the direction of the stacking direction (42) and alternates between the cooling channel cutouts (58) of at least two segments (40g, 40f).

23. Drive housing as defined in claim 21 or 22, **characterized in that** the cooling channel section (104) extends transversely to the stacking direction (42) in certain sections in one segment (40f) and is closed in stacking direction (42) by the material web systems (50, 52, 150) of the preceding and the next following segment (40g).

24. Drive housing as defined in any one of claims 21 to 23, **characterized in that** during the course of its extension transversely to the axis (42) of the stack the cooling channel section (104) changes at least from one segment (40f) into the next following segment (40g) and then back into the one segment (40f).

25. Drive housing as defined in any one of claims 18 to 24, **characterized in that** some of the segments (40u, 40v) have cooling channel cutouts (122, 124, 158) supplementing one another to form a cooling channel section (118, 168) extending in stacking direction (42).

26. Drive housing as defined in claim 25, **characterized in that** the cooling channel sections (122, 124) supplement one another in the segments (40u, 40v) to form a cooling channel section (118) extending in stacking direction (42) but having at least one meander (138) transverse to the stacking direction (42).

27. Drive housing as defined in claim 26, **characterized in that** the cooling channel section (118) has a shape bent in the stacking planes (46).

28. Drive housing as defined in claim 26 or 27, **characterized in that** the cooling channel section (118) has meanders (138) extending transversely to the stacking direction (42).

29. Drive housing as defined in any one of the preceding claims, **characterized in that** at least in the case of some of the segments (40') the material web systems (150) are produced from a hardenable material.

30. Drive housing as defined in claim 29, **characterized in that** the material web systems (150) are produced from a material hardenable following production of the drive housing (10').

31. Drive housing as defined in claim 30, **characterized in that** the material is capable of being hardened by way of induction hardening.

32. Drive housing as defined in any one of the preceding claims, **characterized in that** the drive housing (10') has a guide surface (180) for a movable machine element (140), said guide surface being formed by at least one segment (40').

33. Drive housing as defined in claim 32, **characterized in that** the guide surface (180) extends in stacking direction (42) over several segments (40').

34. Drive housing as defined in claim 32 or 33, **characterized in that** the guide surface (180) is formed by a surface of a section (190) of the material web system (150) of the respective segment (40').

35. Drive housing as defined in any one of claims 32 to 34, **characterized in that** the surface (180) is located in the area of an outer contour of the respective segment (40').

36. Drive housing as defined in any one of claims 32 to 35, **characterized in that** the guide surface (180) is formed by the surface of a narrow side in a section (190) of the respective material web system (150).

37. Drive housing as defined in claim 36, **characterized in that** the section (190) of the material web system (150) is hardened.

38. Drive housing as defined in any one of claims 32 to 37, **characterized in that** the guide surface (180) is a hardened surface.

39. Drive housing as defined in claim 38, **characterized in that** the guide surface (180) has a hardening progression essentially constant in stacking direction (42).

40. Drive housing as defined in any one of claims 32 to 39, **characterized in that** the guide surface (180) is a sliding guide surface.

## Revendications

1. Carter comprenant une multiplicité de segments (40) empilés dans une direction d'empilement (42), découpés dans un matériau plat et s'étendant dans des plans d'empilement (46) de façon transversale par rapport à la direction d'empilement (42), segments dont chacun présente des systèmes continus d'âmes de matériaux (50, 52, 150) qui s'étendent de manière telle, que des segments (40), qui se suivent dans la direction d'empilement (42), soient contigus entre eux, par leurs systèmes d'âmes des matériaux (50, 52, 150), en formant des surfaces de chevauchement (44) et, dans la zone de leurs surfaces de chevauchement (44), sont reliés en nappes les uns aux autres et par continuité de matière, **caractérisé en ce que**, pour la configuration du carter comme carter d'entraînement pour des machines-outils, il est prévu, dans les segments (40), des découpes de logements (54, 56, 154) qui forment un évidement (70, 92, 70') s'étendant dans la direction d'empilement (42), à l'intérieur du carter d'entraînement (10), en dépassant des segments (40), cet évidement servant au logement d'un élément (12, 94) de la machine-outil, et **en ce qu'**une partie des segments (40) présente des âmes de paroi (74) entourant les découpes de logements (54), lesquelles âmes de paroi présentent des zones de chevauchement (44) reliées par continuité de matière, dans la direction d'empilement (42), à des âmes de matériaux (52) précédentes et suivantes et forment une paroi (72) entourant l'évidement (70), cette paroi ayant une meilleure conduction de chaleur dans la zone des âmes de paroi (74).

2. Carter d'entraînement selon la revendication 1, **caractérisé en ce que** les segments (40) sont reliés l'un à l'autre, par continuité de matière, par une couche de brasage en nappe.

3. Carter d'entraînement selon la revendication 1 ou 2, **caractérisé en ce que**, s'agissant d'au moins une partie des segments (40), les systèmes d'âmes de matériaux (50, 52) présentent des découpes (54, 56, 58, 60, 122, 124, 154, 156, 158, 162) traversant les segments (40) sur toute leur épaisseur.

4. Carter d'entraînement selon l'une quelconque des revendications précédentes, **caractérisé en ce que** les systèmes d'âmes de matériaux (50, 52, 150) entourent au moins partiellement les découpes (54, 56, 58, 60, 122, 124, 154, 156, 158, 162).

5. Carter d'entraînement selon l'une quelconque des revendications précédentes, **caractérisé en ce que** l'évidement (70, 92, 70') formé par les découpes de logements (54, 56, 154) s'étend à travers la totalité du carter d'entraînement (10).

6. Carter d'entraînement selon l'une quelconque des revendications précédentes, **caractérisé en ce que** les âmes de paroi (74) forment une paroi (72) séparant l'évidement (70), d'un milieu de refroidissement.

7. Carter d'entraînement selon l'une quelconque des revendications précédentes, **caractérisé en ce que** les âmes de paroi (74) présentent, dans les plans d'empilement (46), une largeur qui varie, le long de ces âmes de paroi, de moins d'un facteur deux.

8. Carter d'entraînement selon l'une quelconque des revendications précédentes, **caractérisé en ce que** les âmes de paroi (74) s'étendent au moins sur une circonférence partielle de la découpe de logement (54).

9. Carter d'entraînement selon l'une quelconque des revendications précédentes, **caractérisé en ce que** les âmes de paroi (74) présentent un contour extérieur (80) placé à l'opposé de la découpe de logement (54), contour extérieur dont le profil suit pratiquement un contour intérieur (78) tourné vers la découpe de logement (54).

10. Carter d'entraînement selon l'une quelconque des revendications précédentes, **caractérisé en ce que**, dans la direction d'empilement (42), des deux côtés d'un segment (40f) ayant une âme de paroi (74), suivent des segments (40g) ayant des âmes porteuses (76) qui sont configurées, dans les plans d'empilement (46), en étant plus larges que les âmes de paroi (74).

11. Carter d'entraînement selon la revendication 10, **caractérisé en ce qu'**un segment (40f) ayant une âme de paroi (74) se situe entre deux segments (40g) ayant une âme porteuse (76).

12. Carter d'entraînement selon l'une quelconque des revendications précédentes, **caractérisé en ce que** la somme des systèmes d'âmes de matériaux (50, 52, 150) reliés en nappes les uns aux autres, dans les surfaces de chevauchement (44), forme une structure autoporteuse continue dans l'espace, pour l'entraînement (12) des machines-outils.

13. Carter d'entraînement selon la revendication 12, **caractérisé en ce que** le carter d'entraînement présente des âmes de matériaux (82, 84, 86) formant la structure, lesquelles âmes de matériaux sont configurées en étant élargies par rapport à d'autres âmes de matériaux (74, 90) situées dans les plans d'empilement (46) et sont disposées en passant dans des directions de charges principales.

14. Carter d'entraînement selon l'une quelconque des revendications précédentes, **caractérisé en ce que** la découpe de logement (54, 154) d'au moins l'un des segments (40s ... 40z, 40'f ... 40'n) forme un siège de roulement (26, 26') pour un roulement (24, 24') de l'entraînement (12, 12') des machines-outils.

15. Carter d'entraînement selon la revendication 14, **caractérisé en ce que** le siège de roulement (26) est formé par les découpes de logements (54) de plusieurs segments (40a, 40v), et au moins une partie de ces segments (40u, 40v) forme des âmes de paroi (120) ayant un meilleur flux de chaleur.

16. Carter d'entraînement selon l'une quelconque des revendications précédentes, **caractérisé en ce qu'**au moins l'un des segments (40e ... 40f) forme, par son contour extérieur (16), une surface portante (18) pour le carter d'entraînement (10).

17. Carter d'entraînement selon l'une quelconque des revendications précédentes, **caractérisé en ce qu'**au moins l'un des segments (40d) forme un élément (22) fixant une position du carter d'entraînement (10).

18. Carter d'entraînement selon l'une quelconque des revendications précédentes, **caractérisé en ce qu'**au moins une partie des segments (40g, 40f) présente des découpes de conduits de refroidissement (56, 58, 112, 114, 156, 158) qui forment au moins une partie de conduit de refroidissement (104, 118, 168) d'un système de conduits de refroidissement (106, 120) s'étendant à travers le carter d'entraînement (10).

19. Carter d'entraînement selon la revendication 18, **caractérisé en ce que** les découpes de conduits de refroidissement (58, 112, 114) de segments (40) qui se suivent dans la direction d'empilement (42) forment des parties de conduits de refroidissement (104, 118) qui, en comportant des coudes (100, 102, 128), s'étendent à travers le carter d'entraînement (10).

20. Carter d'entraînement selon la revendication 18 ou 19, **caractérisé en ce que** les parties de conduits de refroidissement (104, 111) comportant de multiples coudes (100, 102, 128) s'étendent à travers le carter d'entraînement (10).

21. Carter d'entraînement selon l'une quelconque des revendications 18 à 20, **caractérisé en ce que** la partie de conduit de refroidissement (104) s'étend à peu près dans une direction orientée de façon transversale par rapport à la direction d'empilement (42).

22. Carter d'entraînement selon la revendication 21, **caractérisé en ce que** la partie de conduit de refroidissement (104) présente des méandres se formant dans le sens de la direction d'empilement (42) et change entre les découpes de conduits de refroidissement (58) d'au moins deux segments (40g, 40f).

23. Carter d'entraînement selon la revendication 21 ou 22, **caractérisé en ce que** la partie de conduit de refroidissement (104) s'étend, par zones, dans un segment (40f) disposé de façon transversale par rapport à la direction d'empilement (42) et, dans la direction d'empilement (42), est obturée par les systèmes d'âmes de matériaux (50, 52, 150) du segment précédent et du segment suivant (40g).

24. Carter d'entraînement selon l'une quelconque des revendications 21 à 23, **caractérisé en ce que** la partie de conduit de refroidissement (104), au cours de son étendue se formant transversalement par rapport à la direction d'empilement (42) d'au moins un segment (40f), change dans le segment suivant (40g) et ensuite, au retour, dans l'un des segments (40f).

25. Carter d'entraînement selon l'une quelconque des revendications 18 à 24, **caractérisé en ce qu'**une partie des segments (40u, 40v) présente des découpes de conduits de refroidissement (122, 124, 158) qui s'ajoutent à une partie de conduit de refroidissement (118, 168) s'étendant dans la direction d'empilement (42).

26. Carter d'entraînement selon la revendication 25, **caractérisé en ce que** les parties de conduits de refroidissement (122, 124) s'ajoutent, dans les segments (40u, 40v), à une partie de conduit de refroidissement (118) s'étendant dans la direction d'empilement (42) mais de façon transversale par rapport à la direction d'empilement (42) et présentant au moins un méandre (138).

27. Carter d'entraînement selon la revendication 26, **caractérisé en ce que** la partie de conduit de refroidissement (118) présente une forme courbe dans les plans d'empilement (46).

28. Carter d'entraînement selon la revendication 26 ou 27, **caractérisé en ce que** la partie de conduit de refroidissement (118) présente des méandres (138) se formant de façon transversale par rapport à la direction d'empilement (42).

29. Carter d'entraînement selon l'une quelconque des revendications précédentes, **caractérisé en ce qu'**au moins dans le cas d'une partie des segments (40'), les systèmes d'âmes de matériaux (150) sont fabriqués dans un matériau durcissable.

30. Carter d'entraînement selon la revendication 29, **caractérisé en ce que** les systèmes d'âmes de matériaux (150) sont fabriqués dans un matériau durcissable après fabrication du carter d'entraînement (10').

31. Carter d'entraînement selon la revendication 30, **caractérisé en ce que** le matériau est durcissable par trempe par induction.

32. Carter d'entraînement selon l'une quelconque des revendications précédentes, **caractérisé en ce que** le carter d'entraînement (10') présente une surface de guidage (180) formée par au moins un segment (40') et prévue pour un élément de machine mobile (140).

33. Carter d'entraînement selon la revendication 32, **caractérisé en ce que** la surface de guidage (180) s'étend, dans la direction d'empilement (42), sur plusieurs segments (40').

34. Carter d'entraînement selon la revendication 32 ou 33, **caractérisé en ce que** la surface de guidage (180) est formée par une surface d'une zone partielle (190) du système d'âmes de matériaux (150) du segment respectif (40').

35. Carter d'entraînement selon l'une quelconque des revendications 32 à 34, **caractérisé en ce que** la surface (180) se situe dans la zone d'un contour extérieur du segment respectif (40').

36. Carter d'entraînement selon l'une quelconque des revendications 32 à 35, **caractérisé en ce que** la surface de guidage (180) est formée par la surface d'un petit côté dans une zone partielle (190) du système d'âmes de matériaux respectif (150).

37. Carter d'entraînement selon la revendication 36, **caractérisé en ce que** la zone partielle (190) du système d'âmes de matériaux (150) est trempée.

38. Carter d'entraînement selon l'une quelconque des revendications 32 à 37, **caractérisé en ce que** la surface de guidage (180) est une surface trempée.

39. Carter d'entraînement selon la revendication 38, **caractérisé en ce que** la surface de guidage (180) présente une courbe de dureté pratiquement constante dans la direction d'empilement (42).

40. Carter d'entraînement selon l'une quelconque des revendications 32 à 39, **caractérisé en ce que** la surface de guidage (180) est une surface de guidage à glissement.
